(19) Europäisches Patentamt

European Patent Office

Office européen des brevets

(11) **EP 1 614 660 A1**

(12) **EUROPEAN PATENT APPLICATION**

(43) Date of publication:
**11.01.2006 Bulletin 2006/02**

(51) Int Cl.:
*C02F 1/44* (2006.01)     *C02F 1/06* (2006.01)
*B01D 61/02* (2006.01)     *B01D 61/06* (2006.01)
*B01D 3/06* (2006.01)

(21) Application number: **04425500.8**

(22) Date of filing: **09.07.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Saline Water Conversion Corporation, Riyadh - Olia**
**Riyadh 11432 (SA)**

(72) Inventor: **Hassan, Ata M.,**
**c/o Saline Water conversion Corp.**
**Riyadh 11432 (SA)**

(74) Representative: **Iannone, Carlo Luigi et al**
**Ing. Barzanò & Zanardo Roma S.p.A.**
**Via Piemonte, 26**
**00187 Roma (IT)**

Remarks:
A request for correction to exchange the drawings has been filed pursuant to Rule 88 EPC. A decision on the request will be taken during the proceedings before the Examining Division (Guidelines for Examination in the EPO, A-V, 3.).

(54) **Fully integrated NF-thermal seawater desalination process and equipment therefor**

(57)     An optimal thermal seawater desalination process is disclosed, which combines two or more substantially different water pretreatment processes in a unique manner and in a special configuration, hereto unknown to prior desalination arts, to produce a high yield of high quality fresh water, including potable water. In this process a two stage NF membrane pretreatment unit ($NF_2$) with an energy recovery turbo charger (TC) device in between the stages or equipped with an energy recovery pressure exchanger (PX) is synergistically combined with at least one thermal desalination unit to form a dual hybrid of $NF_2$ - Thermal, or alternatively the two stage $NF_2$ unit is synergistically combined with a two stage SWRO unit ($SWRO_2$) with an energy recovery TC in between the stages or combined with one stage SWRO ($SWRO_1$) equipped with an energy recovery TC or PX system and the reject from the $SWRO_2$ or $SWRO_1$ unit is made make-up to a thermal unit to form a trihybrid of $NF_2$ - $SWRO_{2\ reject}$ - Thermal. In both the cases of di- or trihybrids the thermal unit is equivalent to a multistage flash distillation (MSFD) or multieffect distillation (MED) or vapor compression distillation (VCD) or thermal reheat (RH) evaporator.

Fig. 15

**Description**

The term thermal shall mean hereinafter any of the conventional seawater desalination processes of MSFD or MED or VCD or combination thereof in one unit of thermal vapor compressor and multieffect evaporator known also as reheat (RH) distillation system. The present invention process covers all dual $NF_2$-thermal hybrids and all tri-hybrids made of $NF_2$-$SWRO_{2\ reject}$-thermal or $NF_2$ - $SWRO_1$ reject - thermal , where in the dual fully integrated system arrangement, the combined $NF_2$ product from the two NF stages constitutes the make-up to the thermal unit, while in the fully integrated trihybrid case the reject from $SWRO_2$ second stage unit, or reject from $SWRO_1$ unit, which is fed on NF product, constitutes the make-up to the thermal unit.

The present invention deals with an efficient $NF_2$-Thermal process having highest possible water recovery presently available in thermal seawater desalination processes from pretreated seawater feed or seawater beach well feed or other aqueous solution feed, where the feed is characterized by having high concentration of : (1) TDS in the order of 20,000 to 50,000 ppm, and (2) scale forming hardness ions (i.e., $SO_4^=$, $Ca^{++}$, $Mg^{++}$ and $HCO_3^-$) as shown in Table 1, as well as (3) it also contains certain degree of turbidity and bacteria. This is achieved by operating the NF unit and equipment with or without antiscalant system, in two fully integrated, consecutive stages with energy recovery turbocharger inbetween the stages. Depending on type of NF membrane, the first stage NF unit is operated on seawater at pressure(P) provided by the pressure pump at P = 25 $\pm$ 10 bar and the second stage is operated on reject from first NF stage at about 35 $\pm$ 10 bar, where the pressure is boosted by the energy recovered from its (second stage) reject through the turbocharger. In the trihybrid case, the SWRO unit is operated either in one or two stages with energy recovery turbocharger ahead of the one stage system and in between the stages or equipped with an energy recovery PX unit when using two or one SWRO stage.

As shown in latter sections, the seawater pretreatment through the NF unit removes from it (1) the turbidity preventing fouling and biofouling formation and results in (2) lowering of NF product TDS and (3) removing of scale forming hardness ions of $SO_4^=$, $HCO_3^-$, $Mg^{++}$ and $Ca^{++}$, preventing scale formation, thus allowing for the thermal units (any of the thermal units defined above) operation at a much higher top brine temperature limit than previously allowed where, for example, TBT limit for conventionally operated MSFD is 120°C and is only 65 to 70 °C for MED or VCD or RH operations. The reject from SWRO unit fed NF product is also characterized by many of the above qualities as NF product, it is void of turbidity and has very low concentration of hardness ions, although higher than that in NF product, making it also a very good and suitable make-up to seawater thermal units, allowing for their operation at a much higher TBT than previously allowed.

Through this optimal process, for example, the normal recovery from the conventional thermal or SWRO process of about 25 to 35% as applied to Gulf Sea or Red Sea water (TDS ≈ 45,000 ppm) can be raised to about 70% or better by the present $NF_2$ - thermal or $SWRO_2$ processes. This equipment arrangement as in $NF_2$ - thermal or $NF_2$ - $SWRO_2$ process yields an overall water recovery ratio from both the $NF_2$ - thermal or $NF_2$ -$SWRO_2$ units, for example for Gulf seawater (feed TDS ≈ 43-45000 ppm), in the order of 52% or better compared to only 25 to 35% by the conventional thermal or SWRO desalination process, for an increase in water recovery in the range of 50% - 100%, and is also greater than that from our previously developed, the fully integrated NF-SWRO process, where each of the NF and SWRO consists of one single stage only without energy recovery system, Hassan, A.M., U. S. Patent 6,508,936 January 21, 2003. By this optimal seawater desalination process, each of the energy requirement and water production cost per unit water is reduced.

Same additional benefits are gained by the operation of seawater desalination plants in the tri $NF_2$-$SWRO_{2\ reject}$ -Thermal or $NF_2$ $SWRO_{1\ reject}$ - Thermal hybrids wherein the thermal unit is operated on make-up made of reject from the SWRO units which in turn is operated on NF product. Again, the thermal unit is now operated at TBT much higher than their earlier TBT limits. In this mode of operation, both the $SWRO_2$ or $SWRO_1$ permeate and the thermal unit product distillate are of potable water quality and are produced at a higher yield and water recovery ratios of about 60 % or better by about 8 to 10% higher than that of the dual hybrids of about 52% or better, when the feed consists of Gulf seawater (TDS ≈ 45,000 ppm) and much higher when the ocean seawater is the feed.

*Description of the Prior Art*

Many countries have considered desalination of saline water, especially seawater, as a source of fresh water for their arid coastal regions or for regions where water sources are brackish or have excessive hardness. Typical areas where desalination has been considered or is in use include Gulf countries and other Middle Eastern countries; Southern California in the United States; Mediterranean Arab countries of Libya, Algeria and Egypt; Europe mainly Spain, Malta and Cyprus; Mexico and the Pacific coast countries of South America. Similarly, Islands with limited fresh water supplies, such as Malta, the Canary Islands and the Caribbean Islands, also use and are considering desalination of seawater as a fresh water source. Fresh water from the sea now represents over 70% of drinking water in Saudi Arabia, United Arab Emirate. Nearly 100% of drinking water in both Kuwait and Qatar is derived from desalinated seawater.

The conventional SWRO commercial desalination processes consisted of feed pretreatment to remove turbidity, mainly suspended matter and bacteria and the addition of antiscalant, normally acid followed by passing this pretreated feed at high pressure, 55-82 bar (800 to 1200 psi) to SWRO membranes, to separate the feed stream into a product (permeate) and reject (concentrate). In many of the older SWRO plants, a separate second stage brackish water RO unit is included to bring down the salinity of the product from the first stage SWRO unit to drinking water salinity standards. This conventional process, which is in use in many of the early built plants (up to mid nineties) are known by their high energy requirements per unit of desalinated water product and have been operated at relatively low yield, typically from Gulf seawater from 25% with two stage SWRO unit to 35% or less with one stage SWRO. This low water recovery ratio is also true of thermal processes such as multistage flash distillation and multieffect distillation units operated on Gulf seawater. They have, therefore, been economical only for those locations where fresh water shortages are acute and energy is available and its cost is considered (although artificially) low. While desalination plants have also been used in other areas such as California, the use has generally been in times of drought or as standby or supplemental sources of fresh water when other sources are temporarily limited or unavailable. In many locations, where natural water resources are moderately available, current desalination processes cannot compete effectively with other sources of fresh water, such as overland pipelines or aqueducts from distant rivers and reservoirs such as in Southern California.

However, because there is a vast volume of water present in the oceans and seas, and because direct sources of fresh water (such as inland rivers, lakes and underground aquifers) are becoming depleted, contaminated or reaching capacity limits, all those factors combined with the increase in world population without a major increase in natural water resources, there is an extensive research underway through the world for an economical process for desalination of saline water, and especially of seawater. Indeed, this approach is developing into the ultimate goal for satisfying the rising demand for countries with acute water shortages now or in future and, in a way is a major cause for a prevailing peace, where dispute over water resources exist among neighboring nations.

As mentioned earlier, available and in use now are several commercial seawater desalination processes. The thermal multistage flash distillation is the major desalination process now used worldwide. Alone, it accounts for about 41% of total world desalination capacity as compared to about 44% produced by the reverse osmosis (RO) process. The rest (15%) is produced by a variety of processes, primarily electrodialysis (ED), multiple effect distillation and vapor compression distillation (VCD); Wangnick Klaus, 2000 IDA World Desalting Plants Inventory, Report No. 16, International Desalination Association (May 2000) . Saudi Arabia is the leading user of MSFD and the United States is the largest user of the RO process. All MSFD, MED, RH and VCD processes are used exclusively in seawater desalination, while ED is applied in brackish water desalination and pure water preparation. The RO process, however, is a multi saline water desalination process. It is applied to both seawater (SWRO) and brackish water RO (BWRO) feed but in the past its application was primarily in brackish water, drinking water and in pure water preparation. More recently, however, SWRO desalination has become more common and used worldwide, utilizing relatively large plants of 10 or over 15 million gallon/day (mgd) [39-57 million liter/day (mld)] plants.

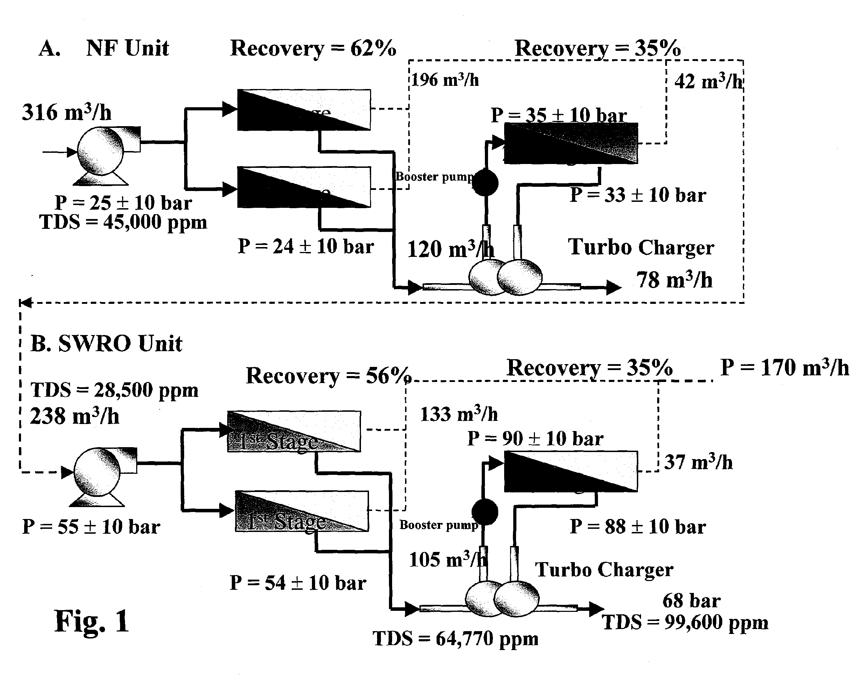

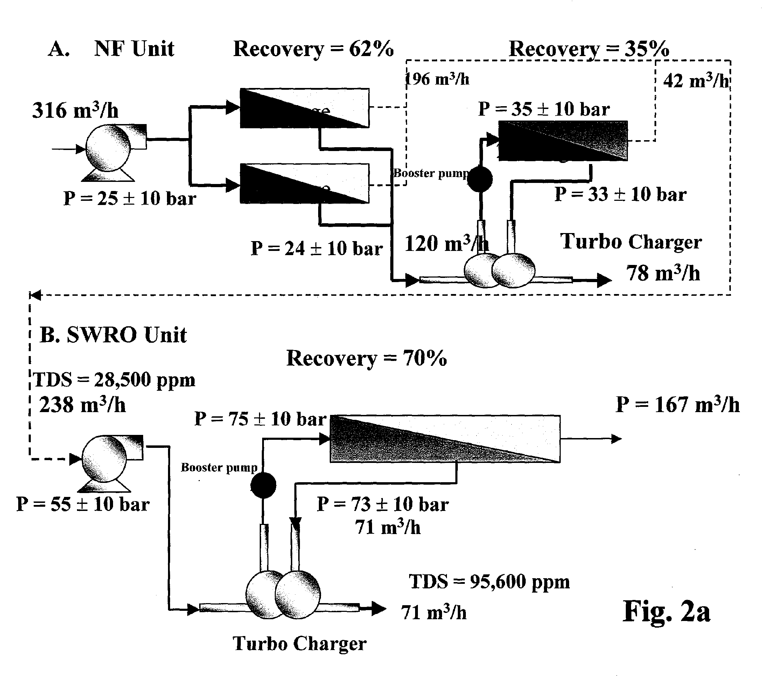

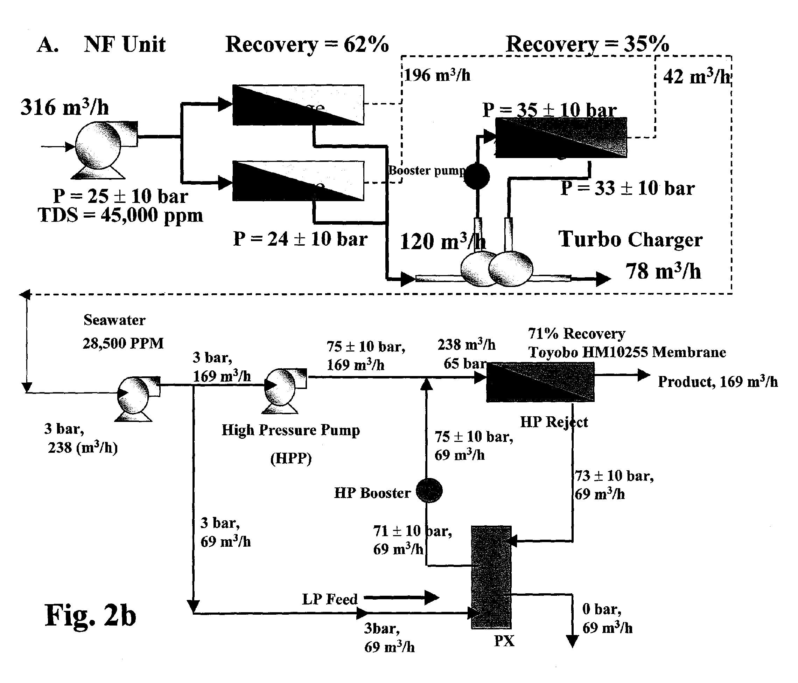

Desalination of seawater must take into account important properties of the seawater itself: (1) type, concentration and total hardness ions, (2) salinity (ionic content and total dissolved solids (TDS)) and (3) turbidity, the presence of suspended particulates and microorganisms as well as other large particles. These properties interfere with desalination system and determine plant performance (product: yield, recovery and quality). In particular, hardness ions, which are sparingly soluble, place limits, for example, of 25%-35% or less on the amount of fresh water yield that can be expected from prior art seawater desalination processes, for example, from Gulf and Red Sea seawater. As represented in Figure 1, seawater desalination processes whether membrane or thermal are separation and concentration processes leading to separation of the feed stream into a clean fresh water product stream of potable water qualities and a reject stream, which has the pollutants; TDS and hardness ions, at high concentration leading to the four major problems encountered into the seawater desalination processes. These are summarized with their causes in Figure 2: (1) scaling, (2) high energy consumption, (3) fouling (4) corrosion enhancement. Because of the hardness ions very low solubility, and the fact that $CaSO_4$ solubility decreases with rise in process temperature, the increase in hardness ion concentration in the brine, places severe limit on desalinated water recovery (25 to 35% or less) from the various conventional seawater desalination processes whether thermal or membrane type.

Reference is made in this application to "saline" water, which includes seawater from seas, e.g., Gulf, Red Sea, Mediterranean and Oceans, water from various salt lakes and ponds, high brackish water sources, brines, and other surface and subterranean sources of water having ionic contents, which classify them as "saline" as shown in Table 1. This can generally be considered to be water with a salt content of TDS $\geq$ 20,000 parts per million (ppm) or greater. Since of course seawater has the greatest potential as a source of potable water, this application will focus on seawater desalination. However, it will be understood that all sources of high salinity, especially high hardness, saline water are to be considered to be within the present invention, and that focus on seawater is for brevity and not to be considered to be limiting.

**Table 1. Typical compositions of Gulf Water and Ocean Seawater**

| Constituents | Gulf Seawater | Mediterranean | Ocean Seawater | North Sea |
|---|---|---|---|---|
| **Cations (ppm)** | | | | |
| Sodium, $Na^+$ | 13,440 | 11,660 | 10,780 | 5,973 |
| Potassium, $K^+$ | 483 | 419 | 386 | 200 |
| Calcium, $Ca^{++}$ | 508 | 441 | 408 | 232 |
| Magnesium, $Mg^{++}$ | 1618 | 1,404 | 1,297 | 738 |
| Copper, $Cu^{++}$ | 0.004 | - | - | - |
| Iron, $Fe^{+++}$ | 0.008 | - | - | - |
| Strontium, $Sr^{++}$ | 1 | - | 1 | - |
| Boron, $B^{+++}$ | 3 | - | 0 | - |
| **Anions (ppm)** | | | | |
| Chloride, $Cl^-$ | 24,090 | 20,900 | 19,360 | 11,000 |
| Sulfate, $SO_4^=$ | 3,384 | 2,936 | 2,702 | 1,545 |
| Bicarbonate, $HCO_3^-$ | 176 | 153 | 143 | 80 |
| Carbonate, $CO_3^=$ | -- | - | - | |
| Bromide, Br | 83 | 72 | 66 | 38 |
| Fluoride, $F^-$ | 1 | - | 1.3 | - |
| Silica, $SiO_2$ | 0.09 | - | - | - |
| **Other Parameters** | | | | |
| Conductivity | 62,000 | - | - | - |
| PH | 8.1 | - | 8.1 | - |
| Dissolved oxygen (ppm) | 7 | - | 6.6 | - |
| $CO_2$ | 2.1 | - | 2 | - |
| Total Suspended Solids (ppm) | 20 | $\geq$20 | $\geq$20 | $\geq$20 |
| Total Dissolved Solids (ppm) | 43,800 | 38,000 | 35,146 | 20,000 |
| Total Bacteria Count | Variable | Variable | Variable | Variable |

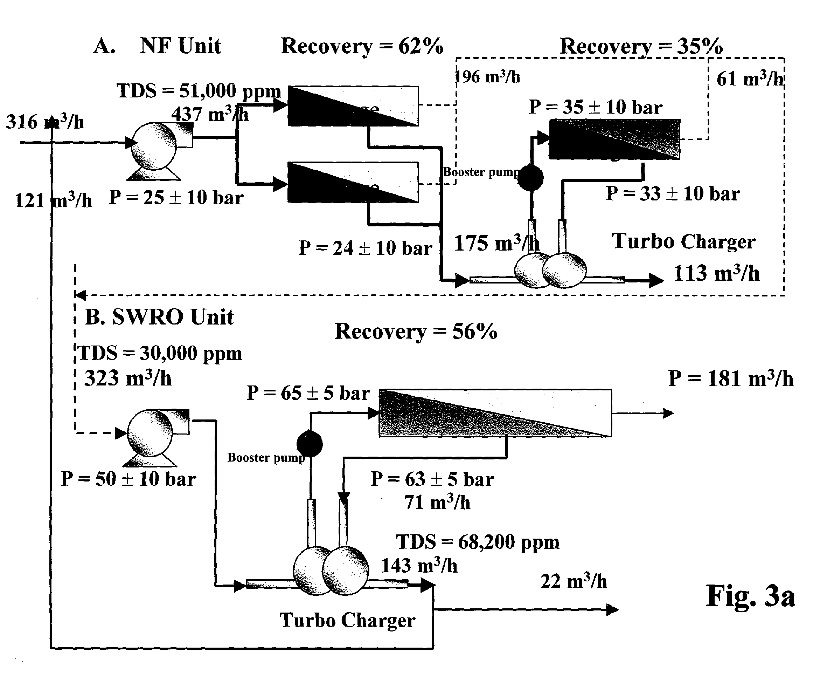

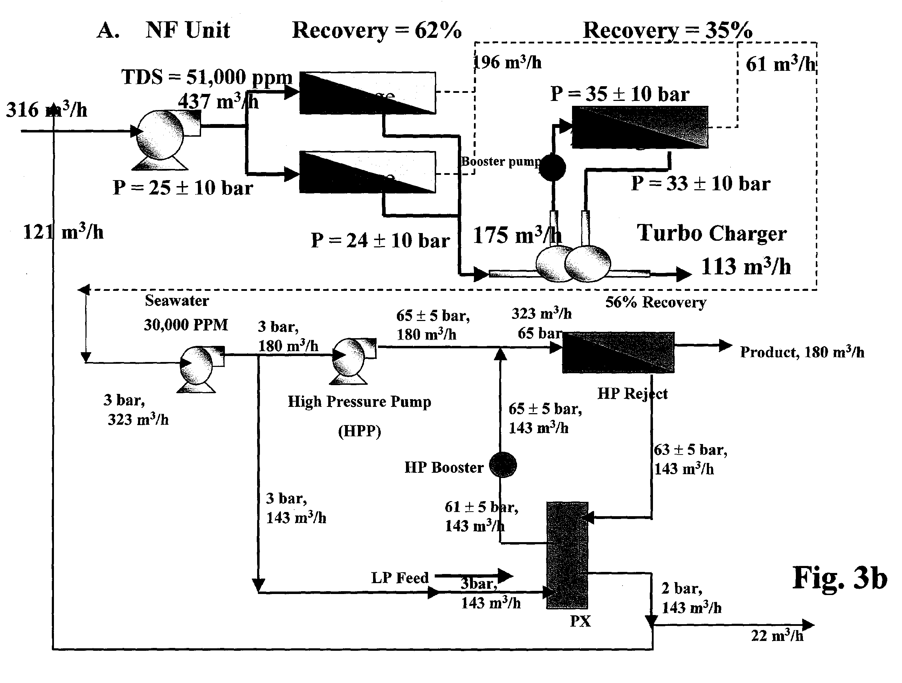

The performance and product recovery of seawater desalination plants (thermal and SWRO plants), as mentioned earlier, are severely limited by the three previously mentioned problems, which are all related to seawater quality and its material contents: (1) turbidity, (2) TDS and (3) total hardness ions in the water feed. Turbidity when present in feed is caught especially on the membrane, which could lead to membrane fouling. Biofouling occurs when bacteria is also present with turbidity in the feed, i.e., total suspended solids (TSS), which provides feed to bacteria. In RO the feed osmotic pressure increases with the TDS. From the principles of RO the applied pressure is: (1) partly and necessarily used to overcome the osmotic pressure and (2) only the remaining part of this applied pressure, defined as the net pressure ($P_{net}$), is the pressure driving the permeate (product) through the membrane. The lower the osmotic pressure can be made by reducing feed TDS, the greater is made the net pressure, and therefore the greater is the amount of permeate water driver through the membrane, which also has the added advantage of producing a higher quantity of product of higher quality (Figure 3).

High level of the sparingly soluble hardness ions in the feed has the greatest damage by limiting the fresh water recovery, since rise in recovery beyond the hardness ions solubility limits leads to the formation of the more disastrous scaling effects, with a precipitous decline in plant performance. Scaling, however, has more of a severe effect on thermal processes than that it causes on the ambient temperature operated SWRO processes. Because calcium sulfate solubility decreases as the operation temperature is increased the deposition of calcium sulfate is more of serious problem to thermal processes than it is to SWRO process and is exaggerated at high temperature.

In summary, the seawater desalination plant scaling along with their high energy requirements and fouling constitute the three major problems in seawater desalination.

Corrosion is the fourth major problems in seawater desalination and its formation is enhanced by the high salinity and high chloride content in seawater. Principal and main objectives of this invention are in developing an efficient, thermal seawater desalination process and method which not only overcome those problems, but leads to establishing an optimal, high efficiency thermal seawater desalination process and equipment.

Raising of the SWRO or thermal seawater distillation plant water recovery ratio should lead to a reduction in unit water production cost, because this unit cost is figured out by dividing the total water production cost by the quantity of product. The larger is the water recovery ratio the greater is the quantity of product and simply the lower is the unit water cost. In this invention, the seawater feed pretreatment through the $NF_2$ membrane process, removes from it, as already stated above, the product water recovery limiting hardness ions. Furthermore, the reject from $SWRO_2$ unit operated on feed consisting of NF product contains also very low level of hardness ions. To raise the NF product recovery and plant yield from SWRO or thermal units, the NF unit is operated in two stages. This way both the yield and water recovery ratio from $SWRO_2$ or thermal units in the dual $NF_2$-$SWRO_2$ or $NF_2$-thermal, as well as thermal unit in the tri $NF_2$-$SWRO_{2\ reject}$ - Thermal are increased from Gulf seawater (TDS = 43-45000 ppm) up to 70-80% and much higher from ocean sea feed (TDS = 35000 ppm). Raising of water recovery by this invention is, as mentioned earlier, a major advantage of the present system. Through this development, I am striving to develop an optimal dual $NF_2$-Thermal as well as $NF_2$-$SWRO_{2\ reject}$ -Thermal or $NF_2$-$SWRO_{1\ reject}$ -Thermal desalination methods that exceed in efficiency and water recovery ratio all prior art thermal seawater desalination methods, and definitely should allow for lifting of the optimum thermal processes TBT limits to much higher values than presently allowed by the conventional thermal processes as well as raising the thermal units water recovery ratio from seawater feed.

The main objectives of this invention are to maximize the plant yield and product water recovery ratio to a much higher yield and product recovery ratio than presently achieved by any of the conventional thermal seawater desalination processes. This is being accomplished by assembling and combining of conventional seawater desalination processes (membrane or thermal type) with NF membrane pretreatment. The following thermal hybrid combinations of NF with conventional thermal seawater desalination processes are to be covered under this invention:

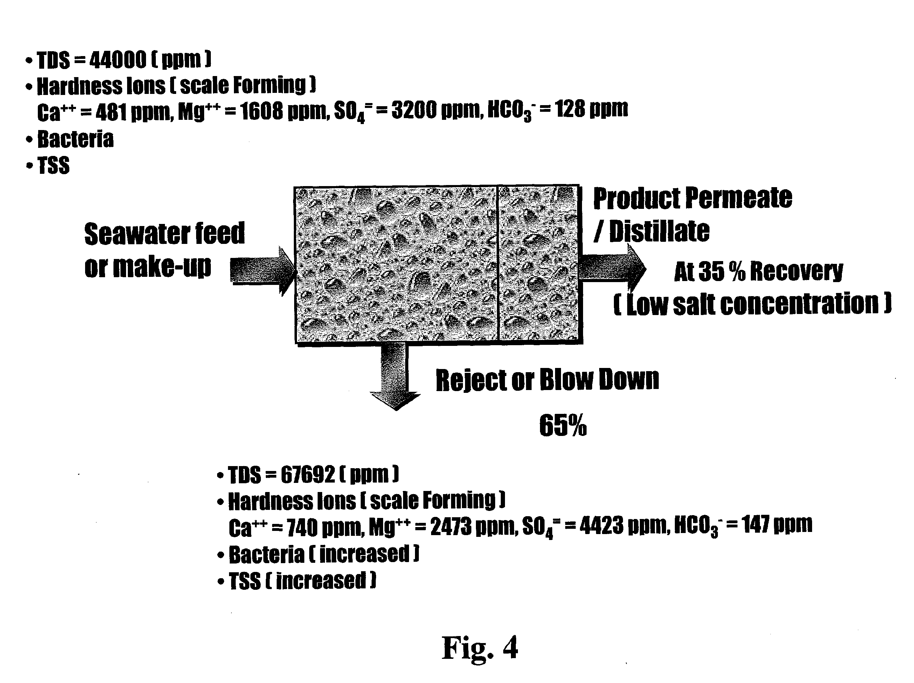

(1) Dual system hybrids of $NF_2$-Thermal (thermal unit can be MSFD or MED or VCD or RH) (Fig. 4)

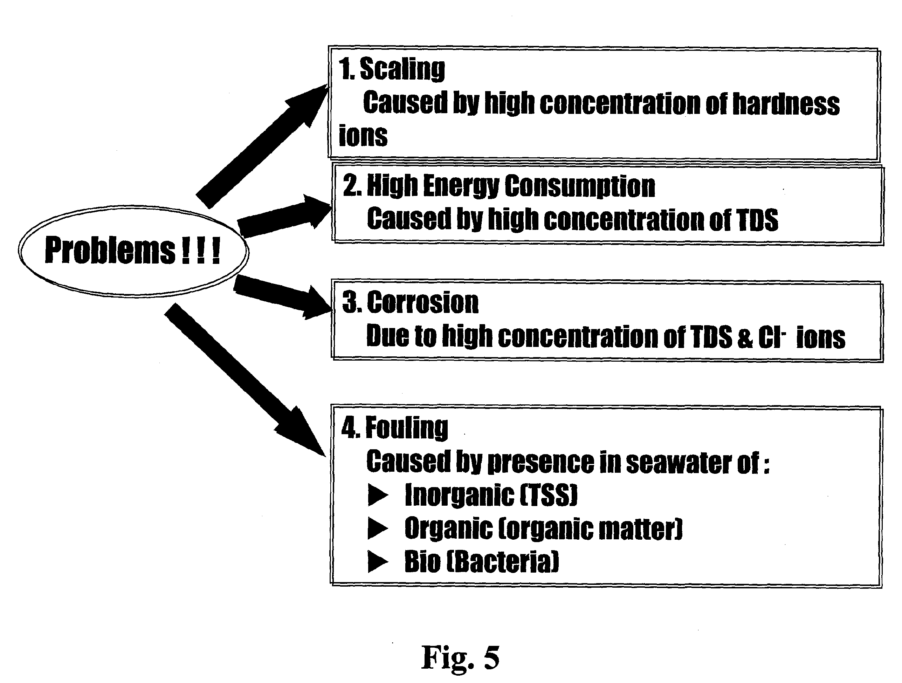

(2) Tri-system hybrids of $NF_2$-$SWRO_{2\ reject}$ - Thermal or $NF_2$-$SWRO_{1\ reject}$ -Thermal (Fig. 5)

where $NF_2$ and $SWRO_2$ each represents a two stage NF and SWRO unit, respectively, with an energy recovery turbocharger in between the stages. The SWRO unit can be made also of one stage high pressure tolerant SWRO membrane unit up to 90 bar, preceded by an energy recovery turbocharger or PX between it and the high pressure pump and the membrane assembly.

The dual $NF_2$-$SWRO_2$ hybrids, which can be formed by this process, however, were covered under a separate patent application to be submitted simultaneously with this patent application covering only the claims to the dual $NF_2$-$SWRO_2$ or $NF_2$-$SWRO_1$ hybrids. **Obviously, because of the similar influence of $NF_2$ pretreatment on both the $NF_2$-$SWRO_2$ and the $NF_2$-thermal, there is also justifiable similarity and duplication in** certain aspects of the discussion and conclusions presented in both filings. They are separated, however, because one of them is a membrane while the other is a thermal desalination process.

In the past, various types of filtration or coagulation-filtration systems have been used for treatment of water and other liquid solutions and suspensions for removal of particulate matter (Table 2). Addition of antiscalant is utilized to assist in preventing formation of scale. But in spite of this conventional pretreatment to remove turbidity and addition of antiscalant to prevent scaling, fresh water recovery ratio is still limited for example in conventional desalination Gulf SWRO (TDS $\approx$ 45,000 ppm) to 25-35% or less.

In a more recent approach in removal of fine particles with sizes less than 2 micrometer ($\mu m$), microfiltration (MF) or ultrafiltration (UF) are used. The low pressure reverse osmosis (LPRO) or brackish water RO (BWRO) membranes (see below) were employed also ahead of SWRO pretreatment. The MF membrane pretreatment is used to remove particles having sizes in the range of 0.08-2.0 $\mu m$. The UF membrane process is more effective for the removal of finer particles having sizes in the range of 0.01-0.2 $\mu m$ and of molecular weight (MW) in the range of 10,000 g/mole and above. Both the MF and UF membrane processes are true filtration processes, where particle separation is done only according to particle size and not according to its ionic characteristics. Moreover, each of the MF and UF membranes has its own characteristic pore size and separation limits. These two membrane filtration processes are effective in keeping the feed clean by their removal of turbidity and bacteria, and as such, they are very effective pretreatment process for the prevention during plant operation of membrane fouling including biofouling. The MF and UF filtration pretreatment processes differ significantly from the RO pretreatment process. Unlike the filtration by the MF and UF membrane processes, which, as already mentioned, do not separate or reject ions from their solution or seawater, the RO process, is a differential pressure process for separation of all ionic particles with sizes of 0.001 μm or less and molecular weights of 200 g/mole or less. Moreover, those very tight structure SWRO membranes require high pressure operation in the order of 50 to 80 bar, compared to only a low pressure operation of about 5-10 bars for MF and UF processes.

**Table 2. Pretreatment and Quality Requirements of Feed Taken from an Open Sea (Surface) Intake**

| Problems in Seawater Desalination due to Seawater Characteristics | Pretreatment and Quality Requirement of Feed to | |
|---|---|---|
| | SWRO | Thermal |
| High degree of hardness of ($Ca^{++}$, $Mg^{++}$, $SO_4^=$, $HCO_3^-$) | Requires : <br><br> • Removal or <br><br> • Inhibition of precipitation by addition of antiscalant, and by <br><br> • Operation at correct conditions | Requires: <br><br> • (Removal or <br><br> • Inhibition of precipitation by adding antiscalant <br><br> • Operation at correct condition |
| High TDS | Requires lowering of TDS which in turn: <br><br> • Lowers waste due to $\pi$ <br><br> • Increases recovery ratio | Lowering of TDS beneficial by reducing concentration of hardness ions |
| | • Lowers energy /m³ <br> • Lowers cost/m³ | |
| High turbidity (TSS, bacteria, etc.) | Requires complete removal | • Requires partial removal <br><br> • Complete removal of turbidity, however, reduces foaming and therefore, eliminates need for addition to make-up of antifoam. |

By comparison to other membrane separation processes, the NF membrane process falls in between the RO and UF separation range, and is suited for the separation of particle sizes in the range of 0.01-0.001 μm and molecular weights of 200 g/mole and above. Unlike either UF or RO, however, NF acts by three principles: rejection of neutral particles according to size and rejection of ionic matter by electrostatic interaction with a negatively charged membrane; Rautenbach et al., *Desalination,* 77: 73-84 (1990). Additionally, the NF membrane operation is also partially governed by the osmotic principle (see US patent 6,508,936). For these reasons, as shown in later sections, the NF membranes differ from RO, which rejects all ions, covalent or monovalent, more or less, to the same degree, in that the NF has a much greater rejection to covalent ions such as the scale forming hardness ions of $SO_4^=$, $HCO_3^-$, $Ca^{++}$ and $Mg^{++}$ than their rejection of monovalent ions of $Na^+$, $Cl^-$, etc. NF has been used in Florida for treatment of brackish hard water to produce water of drinking water standards. The NF process has also been used for removal of color turbidly, and dissolved organics from drinking water; Duran et al., *Desalination,* **102:**27-34 (1995) and Fu et al., *Desalination,* **102:** 47-56 (1995). NF has been used in other applications to treat salt solution and landfill leachate; Linde et al.. *Desalination,* **103**:223-232 (1995); removal of sulfate from sea water to be injected in off-shore oil well reservoirs; Ikeda et al., *Desalination,* **68**:109 (1988); Aksia Serch Baker, *Filtration and Separation* (June, 1997). As shown below, the NF seawater membrane pre-treatment is done at much lower pressure, typically 10 to 25 bars, than the SWRO membrane operation (typically 55-82 bar, i.e., 800 to 1200 psi).

In addition to the above uses of the NF process, it was also utilized in a variety of seawater and aqueous solution treatment. As mentioned above, an NF membrane US Pat. No. 4,723,603, was employed in removal of sulfate from seawater, which still high in sodium chloride content, was used in making drilling mud in off-shore drilling, preventing through this process barium sulfate scaling. US Patent No. 5,458, 781 describes an NF separation of aqueous solutions containing bromide and one or more polyvalent anions into two streams: a stream enriched in bromide and a second stream enriched in polyvalent anions. It was suggested but never was done, that the bromide-enriched stream is to be further treated by RO for bromide concentration for use in industrial application. EPO Publication No. 09141260, 03,06,97 proposed problem solving "to improve the concentration rate while suppressing precipitation of scale by passing seawater through three flat membrane cells of nanofilter (NF membrane) of polyvinyl alcohol polyamide to remove sulfate ion and then passing the filtered water through RO membrane to remove $SO_4^=$ (not much detail of the work, however, is given).

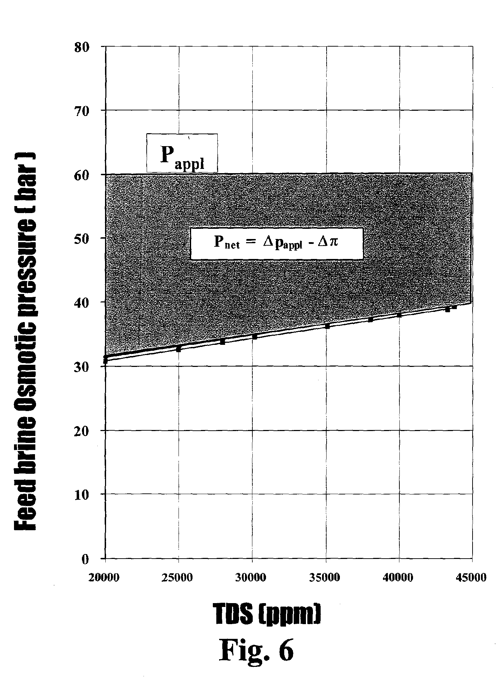

But as shown in Figure 6, it was Hassan, A.M., in the US Patent 6,508,936 who was the first to apply the NF pretreatment to SWRO and other seawater thermal (MSFD, MED, VCD) desalination processes, first at the pilot plant and demonstration desalination plant stage; Hassan et al, Desalination and Water Reuse Quarterly May-June Issue (1998) Vol. **8/1,** 54-59, also September-October Issue (1998), Vol. **8/2,** 35-45: also Desalination **118** (1998) 35-51; Desalination **131** (2000), 157-171: IDA World Congress on Desalination and Water Reuse (San Diego) Proceedings (1999) (Paper received Top IDA Thermal Award on Desalination) plus many other publications.

This above new NF-SWRO desalination process, which was first developed at the pilot plant, and proved successful in overcoming the previously mentioned major problems in conventional seawater desalination processes by: (1) preventing SWRO membrane fouling, (2) prevented plant scaling and (3) increased significantly plant productivity, both yield and recovery and improved SWRO product quality as well as it lowers both energy requirement and cost per unit water product. Similar advantages were gained by combining an NF membrane unit with thermal desalination MSFD unit in a dual hybrid desalination unit as shown in Figure 6. Because of the removal of hardness from the reject in SWRO unit, which is fed NF product, again as shown in same figure, the SWRO reject was used successfully as make-up feed to the MSFD unit. In both the dual NF-MSF hybrid and the trihybrid of NF-SWRO$_{reject}$-MSF, the MSF unit was operated for the first time ever at top brine temperature (TBT) of 120°C, also later at higher TBT of up to 130°C without antiscalant and without scale formation at high yield of up to 70% to 80% (see references in previous paragraph.).

Same argument applies when replacing the MSFD unit in Figure 6 by any thermal unit of the type MED or VCD or RH, while in each case the unit is operated on make-up of NF product or SWRO reject from the NF or SWRO units shown in the same figure. In order to avoid scale formation on the surface of the evaporation tubes in which the vapor is passed, the operation of singly operated MED or VCD or RH unit is limited to TBT$_{limit}$ in the order of 70°C or less. Operation of any of those units as shown in Figure 6 on NF product or reject from SWRO unit, or mix thereof of NF product with SWRO reject from SWRO unit operated on NF product allows for their operation at a much higher TBT above their present TBT limit, with significant gain in both distillate yield and recovery ratio. Under those make-up conditions, for example, the MED unit can be safely operated now at TBT > 70 °C, e.g., 80-120°C or higher without danger of scaling and without the addition of antiscalant.

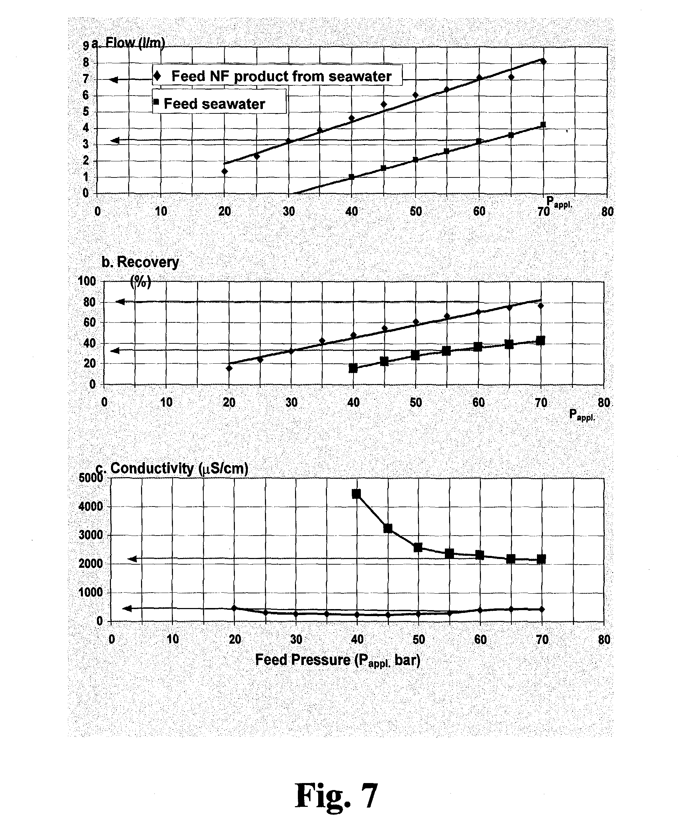

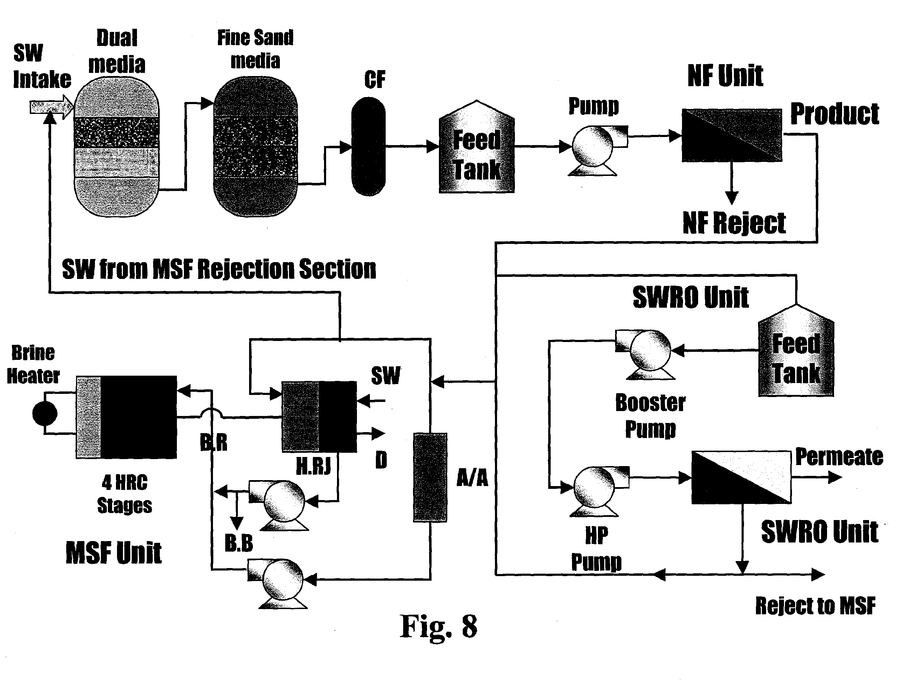

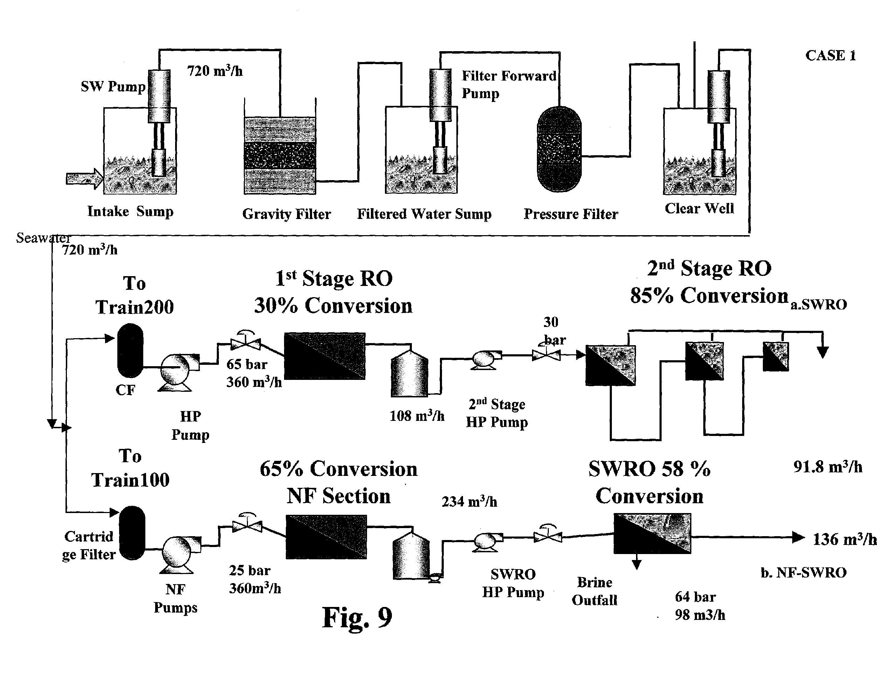

This dual NF-SWRO desalination process where each of the combined NF and SWRO unit is operated in one single stage, was further applied as shown in Figure 7 on a commercial plant scale, one SWRO Train 100, capacity 2203 m³/d (582,085 gpd) at the existing Umm Lujj SWRO plant, which was commissioned in 1986. The plant was converted from a single SWRO desalination process to the new dual NF-SWRO desalination process by the introduction of an NF pretreatment and semidesalination unit ahead of the existing SWRO unit, Figure 7. A photo of the actual NF plant is shown in Figure 8, front unit in the photo is the NF unit which is completely integrated with the SWRO unit in the back of the photo. The second Line, Train 200, at the same plant, which is identical in design and production to Train 100, was kept operational in the single SWRO mode. In order to establish the operating parameter for a large NF-SWRO plant Prior to the conversion of the plant to the dual NF-SWRO process, the process was tested utilizing a demonstration unit simulating the new NF-SWRO plant in design and operation. From the results of this trial, the NF recovery in Train 100 NF-SWRO was fixed at 65% (Figure 9) and later operated successfully at a demonstration mobile pilot unit for over two months at NF product recovery of 70%; Hassan, A.M., et al., IDA World Congress on Desalination Proceedings (Bahrain), Oct. 2001, see Abstract, p. 193-194..

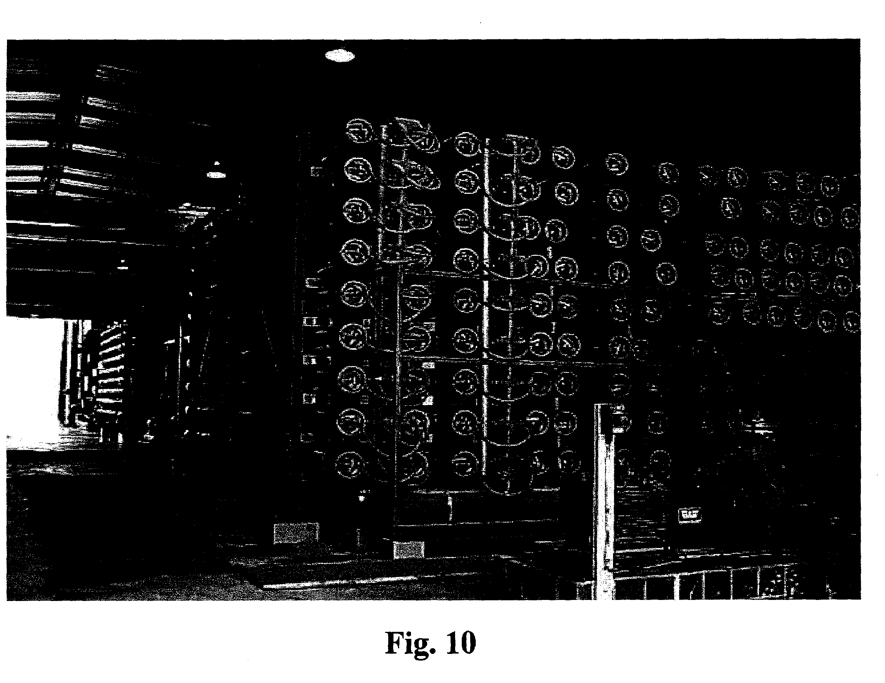

The NF unit of Train 100 ionic rejection for the scale forming hardness ions of $SO_4^=$ , $Mg^{++}$ , $Ca^{++}$ , $HCO_3^-$, and total hardness were : 99.9% , 98%, 92%, 56% and 97%, respectively, Figure 10. This very high rejection of hardness ions compares to a rejection of only 24% for the monovalent Cl⁻ ion, and 38% rejection of TDS ions, where the seawater feed TDS of about 45,460 was reduced to 28,260 in the NF product (Figure 10).

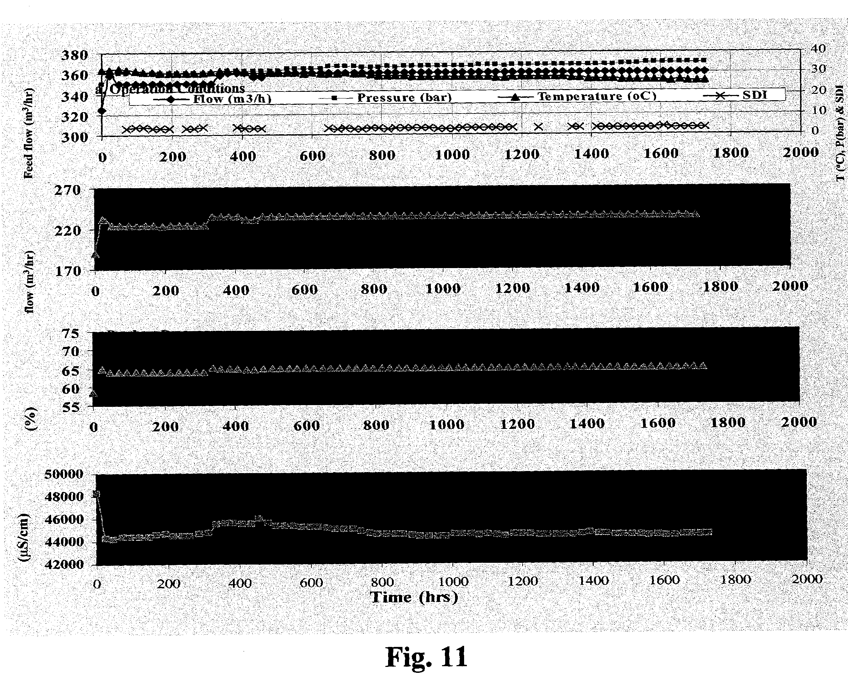

The results obtained from the operation of this commercial SWRO unit in the new dual NF-SWRO desalination hybrid showed vastly improved product output and recovery ratio over its (SWRO unit) operation in the commercial conventional SWRO desalination process. The output of Train 100 operated in the NF-SWRO mode was 130 m³/h from feed of NF product as compared to an output of 91.8 m³/h when it was operated in the singular, conventional SWRO operation on 360 m³/h of seawater feed of 234 m³/h, for an increase in train productivity by 42%. Furthermore, the SWRO unit recovery ratio in the dual NF-SWRO operation of 56% was double its recovery ratio of 28%, when it (SWRO unit) was operated in the singular mode. The same trend was noticed when comparing the permeate productivity and recovery ratios of NF-SWRO Train 100 to those results obtained from SWRO Train 200, which were for SWRO unit in the ratios of 1.5:1.0 and 56%: 23.5%, respectively, in favor of the former over the latter train operation (Figure 11). Also, when compared to its operation in the conventional SWRO process, Train 100 operation in the dual NF-SWRO hybrid reduced significantly the unit production (m³) energy consumption and cost by 23% and over 46, respectively. By comparison to SWRO operation, the expected saving in both energy consumption/m³ and cost of unit water production by the NF-SWRO process are 39% and 68%, respectively. Furthermore, line conversion from SWRO to NF-SWRO operation can be done swiftly and at a relatively low cost.

The US Patent 6,190,556 B1, Feb. 20, 2001 describes an apparatus and method for producing potable water from aqueous feed such as seawater utilizing a pressure vessel designed for low pressure operation (250 to 350 psi), inside this vessels both NF and RO membranes are placed with NF membrane elements upstream of RO membranes elements. The seawater feed is first passed through the vessel to be treated at this low pressure through the NF to remove hardness, but is only flushed unaffected through the RO membrane section. The collected NF product in a specially designed device is later passed under same pressure, utilizing same pump, through the same vessel, where its osmotic pressure is reduced, allowing for its desalination through the RO membrane.

In several other patents the RO modules were utilized ahead of SWRO modules in SWRO desalination.. US Patent 4,341,629 dated 7, 1982 described a process using first 90% ion rejection cellulose acetate followed by 98% ion rejection cellulose triacetate. US Patent 4,156,645 dated 5, 1979 invention proposes the recovery of fresh water in two consecutive but separate stages each having its own high pressure pump, utilizing SWRO tight membrane to treat the product from a loose RO membrane, the latter with 50 to 75% ion ction, operated at low pressure P =300 to 400 psi. Loose RO membrane unit was also utilized ahead of a tight membrane unit, each unit is operated separately and has its own high pressure pump, in EPO 6,120,810. US Patent No. 5,238,574, describes a method and apparatus for treating water by a multiplicity of RO membranes followed by evaporation devices to produce water and salt. US Patent No. 4,036,685 also describes a process and apparatus for production of a high quality permeate withdrawn from the first RO cartridge, while lower quality permeate is produced by combining the product from the next following two cartridges in series with first cartridge RO.

From the above discussion and results, it can be emphasized that the NF is designed to perform in addition to other pretreatment a very specific function, namely its ability to reject hardness and covalent ions to a much greater degree than its rejection for monovalent ions (see NF rejection at Umm Lujj plant- Figure 10) and as mentioned earlier at a much lower pressure than required by SWRO or RO processes. These facts distinguish this super pretreatment and separate its function from other previously indicated water separation membrane processes, i.e., MF, UF and RO. For this quality, it should be remarked that Nanofiltration, loose reverse osmosis and low pressure reverse osmosis, which have been utilized in above mentioned patents, i.e., SWRO membranes receiving RO, loose RO, LPRO pretreated feed, are not considered to be equivalent in the art. Those skilled in the art in fact have recognized and still do recognize this fact that Nanofiltration (NF) pretreatment of feed seawater, which allows for removal of hardness and in consequence the production of potable water from SWRO at high recovery and without scale formation, is not the operational or functional equivalent of reverse osmosis (RO) or loose membrane reverse osmosis (LMRO). The references cited below emphasize that differentiations:

1. Bequet et al., *Desalination,* **131** ;299-305 (2000).
2. Bisconer, "Explore the Capabilities of Nano- and Ultrafiltration, "*Water Technology,* March 1998 (2 pages; page numbers not stated).
3. Kodak, "Nanofiltration for Professional Motion Imaging," On-Line Technical Support paper, pp. 1-6 (dated 1994-2000).
4. Linde et al., *Desalination,* **103**:223-232 (1995) *[ABSTRACT ONL Y]*
5. Nicolaisen, "Nanofiltration - Where does it Belong in the Larger Picture," pp. 1-7, Product technical bulletin for "Desal-5" membrane products; Desalination Systems, Inc. (December 1994).
6. Scott Handbook of Industrial Membrane, 1995 (page 46).

As Bisconer notes, the art recognizes that RO and NF can be considered to be "cousins" and that the membranes used may look alike, but that in fact they "serve distinctly different separation functions." It is clear from the references that among the significant differences among NF and RO (BWRO, loose RO and LPRO), NF provides significantly greater rejection of hardness ionic species and at a much higher product flux than RO, facts which were truly observed at Umm Lujj NF-SWRO trial; this is in addition to a much greater improved feed quality, see above Hassan et al, also see Figure 10. See also especially Nicolaisen (1994), who points out that while various terms are sometimes used incorrectly in the art, those skilled in the art recognize definite superiority of NF to RO in at least its specific higher rejection of di- and tri-anionic species than the rejection of NaCl as well as it has (NF membrane) much greater flux than that ofRO membranes. In addition, it has greater tolerance to turbidity fouling than SWRO membranes. Others make the same points, by noting that RO flux is low compared to NF flux and high pressures along with much higher membrane surface areas are needed for RO than with NF membranes. These facts were observed at the above commercial trial of NF-SWRO operation at Umm Lujj plant Train 100, where each NF module provided feed to nearly three SWRO modules (a module consists of one pressure vessel fitted with six membrane elements). To be operative, RO unit requires finer feed pretreatment than the NF membrane process in removal of solid particulates.

The SWRO membranes are the tightest desalination membranes and are characterized by their high salt (all ions) rejection. The SWRO membranes are operated at high pressure, 55-82 bar depending on membrane type, and because of their low flux, the SWRO process requires a large number of SWRO membranes to produce large quantity of water. Because of all those factors, the cost of water production by the SWRO process is considered to be the highest among all other membrane desalination processes. On the other hand, the NF membranes are operated at a much lower pressure and are characterized by having high flux.

But most importantly, as mentioned above, they are characterized by their high specificity to the rejection of the scale forming hardness ions ($SO_4^=$, $Ca^{++}$, $Mg^{++}$, $HCO_3^-$); see Hassan et al. under previously given references.

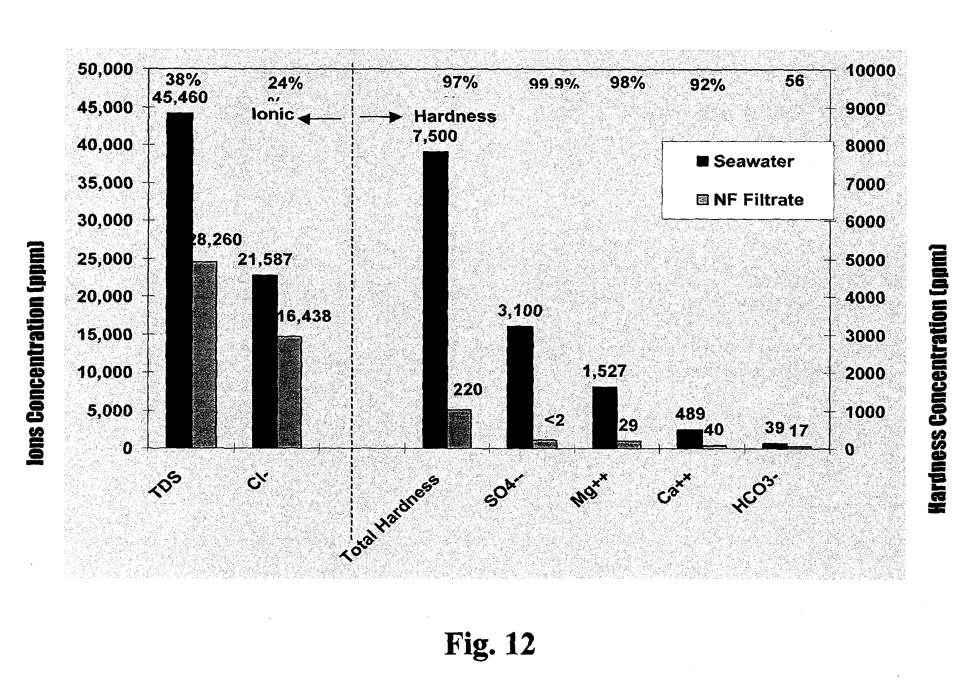

With those major different properties, qualities and characteristics among SWRO and NF membranes as well as the properties which distinguish NF from other RO membrane including as mentioned above loose RO or low pressure RO membranes, an advantage was established in fully integrating NF and SWRO membrane or NF and thermal processes in one dual NF-SWRO operation process, or NF-thermal or in a trihybrid thereof constituted of NF-SWRO$_{reject}$- thermal as was done above successfully by Hassan, A.M., US patent 6,508,936, first on pilot plant scale (see Figure 6) and later on a commercial plant scale (see Figures 7 and 8). This, however, was done by utilizing each of the NF and SWRO units as well as the thermal unit in one stage. As shown later, greater advantage is seen in operation of each of the NF and SWRO unit in the dual $NF_2$ -$SWRO_2$ set-up in two stages, with turbocharger in between the stages to recover energy from the brine. This highly optimized and well designed dual $NF_{(2\ stages)}$- $SWRO_{(2\ stages)}$ arrangement, which as shown in Figure 12 for a proposed Red Sea SWRO plant, feed 316 m$^3$/h and yield about 170.0 m3/h (1.08 mgd), is an optimal seawater desalination process and not only provides for an economical, efficient SWRO desalination operation by raising plant output, both yield and water recovery ratio, and by lowering energy requirement as well as the cost of fresh water unit production from the sea, but also it exceeds by far in efficiency what can be expected from prior art of conventional seawater desalination processes. This process is further applied in the operation of $NF_2$ - thermal and $NF_2$ - $SWRO_{2\ reject}$ - thermal of this invention (Figs. 4 and 5) where thermal unit can be an MSFD or Med or VCD or RH and the $SWRO_1$ is made of one SWRO unit operated at P ≈ 75 ±10 bar utilizing high pressure tolerant SWRO membrane (P ≈ 84 bar).

This above optimal $NF_{(2\ stages)}$- $SWRO_{(2\ stages)}$ and the di and tri $NF_2$ - thermal seawater desalination system are not only quite different from prior art including the process described in US Patent 6, 190; 556B1, but is also much more superior to them in process efficiency and economy. For example, the NF-SWRO system described in US Patent 6, 190, 556 B1, Feb. 20, 2001, in which both the NF and SWRO elements are placed in same one pressure vessel are operated utilizing one pressure pump at an equal but low pressure of 250-350 psi (17-25 bar). In this system operation is to start first by collecting sufficient NF product, after which this collected NF product in a specially designed and controlled holding tank, is passed under pressure (low pressure of 250-350 psi), to SWRO membrane to produce a product, with a questionable quality, mainly because of the SWRO low pressure. More important, the NF membranes are to operate part of the time then to stand idle while SWRO is operational and vice versa, for partial utilization of the NF or SWRO membranes. By contrast, all the components and units in the present patent application in di and tri hybrids of $NF_2$ - thermal with and without SWRO combinations or in $NF_{(2stage)}$-$SWRO_{(2\ stage)}$ are fully utilized 100 per cent, a fact that results in higher plant productivity. Moreover, the two stage arrangement provides for sufficient high pressure to the 2$^{nd}$ stages feed, especially to 1$^{st}$ and 2$^{nd}$ stage SWRO units in above hybrids, again allowing for higher plant productivity along with much higher product quality than that obtained from use of above US Patent 6,190,556 Bl. To produce on a commercial scale same quantity of water by the two processes requires also much greater capital investment and more equipment utilizing the latter process than by that (optimal process) submitted in this patent application.

It would, therefore, be of substantial worldwide human interest, especially to those who need fresh water from the sea but can not afford it, to have available an optimal thermal seawater desalination process, which would economically produce a good yield of fresh water from saline water, especially from seawater, and which would effectively and efficiently deal with the problems mentioned above; i.e., removal of hardness and turbidity from such saline water and the lowering of total dissolved solids at an increased plant productivity and an economical efficiency including low energy consumption and low water cost per unit water product. Again, the utilization of the NF (2 stages) pre-treatment process or the reject from SWRO unit fed NF product in providing make-up to thermal MSFD or MED or RH or VCD plants will lead to similar gains in those thermal desalination units, and results also in tremendous improvement in the efficiency of all those seawater thermal desalination plants.

## SUMMARY OF THE INVENTION

I have now invented an optimal thermal seawater desalination process, which, by combining two substantially different water membrane and thermal processes, as represented by the arrangement given in (Figs. 4 and 5) in a manner not heretofore done, to desalinate saline water, with particular emphasis on seawater, to produce a very high yield of high quality fresh water, including potable water, at an energy consumption per unit of product equivalent to or better than much less efficient prior art thermal desalination processes. To achieve this objective each of the NF and SWRO units in Figure 5 as parts of a trihybrid process is to be operated in two stages with energy recovery turbocharger in between the stages or utilizing one stage SWRO equipped with an energy recovery TC or PX system, operated on high pressure tolerant membrane up to 90 bar, and with NF and SWRO membrane selectivity for the process as described below and in the previous sections. This way not only increases the yield and productivity of product from each step along with improving product quality but it also reduces the energy consumption per unit water production in the ratio of optimal $NF_2$ - $SWRO_2$ or $NF_2$ - $SWRO_1$ part of the process: conventional singular SWRO process of about 0.445 : 1, with the ultimate effect on reducing the cost per unit water product. In my process the two stage nanofiltration as a first desalination step is synergistically combined with either: (1) a thermal desalination unit of (MSFD or MED or VCD or RH) to form a dihybrid of $NF_2$ - thermal (Fig. 4) or (2) to synergistically combined with two stage $SWRO_2$ unit or one stage $SWRO_1$ unit, to produce potable product and reject, the latter constitutes the make-up to the thermal unit (MSFD or MED or VCD or RH) combined with it in a trihybrid of NF-$SWRO_{reject}$ -thermal (see Figure 5) to provide totally integrated desalination system by which saline water (especially seawater) can be efficiently and economically converted to high quality fresh water in yields which are significantly larger or better than the yields available from the prior thermal seawater desalination art processes, alone or in combinations heretofore known or described. Thus, while individual steps have been separately known and such steps have individually been disclosed in combination with other processes for different purposes, but at different staging and configuration, the present process, as argued earlier, has not previously been known to, or considered by those skilled in the art and nothing in the prior art has suggested the surprising and unique magnitude of improvement and high system efficiency in all forms of saline water desalination (membrane or thermal) obtained through this process as compared to prior art processes and equipment.

Therefore, in a broad embodiment, the invention is of a desalination process which comprises passing saline water containing hardness scale forming ionic species, microorganisms, particulate matter and high total dissolved solids through the two stage nanofiltration with energy recovery turbocharger in between the stages, supplemented as needed with a pressure boosting pump, to form a first high recovery low energy consuming NF water product having drastically reduced content of said hardness ionic species, as well as significantly lower TDS content than seawater and completely removed microorganisms or particulate matter, and thereafter passing said **first water product** combing the NF product from both the NF stages, through the following MSFD or MED or VCD or RH seawater distillation unit to produce a **second water product** (distillate) having salinity equal to that of potable water quality and is far less than that of said reject product (blow-down) (Fig. 4).

Again in a second broad embodiment, the invention involves a desalination process which as in above Claim 1 comprises passing said saline water containing hardness scale- forming ionic species, microorganisms and particulate matter through the two stage NF ($NF_2$) membrane process unit to form from the combined product of the two NF stages a **first water product** having reduced content of said ionic species, microorganisms or particulate matter, thereafter passing said first water product through the following two stage SWRO ($SWRO_2$) with energy recovery TC in between the stages, supplemented as needed with a pressure boosting pump to form from the combined product from the two SWRO stages a **third water product,** low energy consuming SWRO water product of potable quality also having reduced salinity and a **fourth reject product** having increased salinity but very low in hardness scale forming ions and thereafter passing said SWRO reject through MSFD or MED or VCD or RH seawater distillation unit to produce a **second water product** (distillate) having salinity equal to that of potable water and far less than that of said reject product(Fig. 5).

**Both the first and second embodiments shall constitute the basis for an optimal thermal seawater desalination process, which shall be the subject of this patent application comprising the following seawater thermal desalination hybrids:**

1. Dual NF - Thermal of :

$NF_{(2\ stages)}$ - MSFD, or
$NF_{(2\ stages)}$ - MED or $NF_{(2\ stages)}$ -VCD, or $NF_{(2\ stages)}$ - RH, or

2. Tri $NF_2$ - $SWRO_2$ - Thermal of:

$NF_{(2\ stages)}$ - $SWRO_{2\ reject}$ -MSFD, or
$NF_{(2\ stages)}$ - $SWRO_{2\ reject}$ - MED, Or
$NF_{(2\ stages)}$ - $SWRO_{2\ reject}$ - VCD, or
$NF_{(2\ stages)}$ - $SWRO_{2\ reject}$ - RH

where in the dual hybrids, the NF product constitutes the thermal unit make-up, while in the trihybrid systems the reject from one or two stage SWRO constitutes the make-up to the thermal unit.

Furthermore, the NF unit in the above arrangement as shown in Figs. 4 and 5, which consists of two NF units ($NF_2$) with energy recovery TC in between the stages, can be equally replaced by an energy recovery PX equipped two stage NF units with booster pump in between. In a similar manner, the two stage SWRO ($SWRO_2$) with energy recovery TC in between can be replaced by one stage $SWRO_1$ equipped by an energy recovery PX unit, operated with a high pressure (P ≈ 84 bar) tolerant SWRO membrane.

The process readily and economically yields significant reductions in saline water (especially seawater) properties, and produces good fresh water including potable water. Typically a process of this two stage NF product by this invention will produce with respect to the seawater feed properties, calcium and magnesium cation content reductions on the order of 75%-95% or better, sulfate reduction in the order of 90 to 99.9% or better, pH decreases of about 0.4-0.5, and total dissolved solids content (TDS) reductions of about 30%-50%. Meanwhile product from the SWRO unit is potable water quality, while distillate are the water potable product from MSFD, or MED or VCD or RH units when they are operated on make-up consisting of NF product or SWRO reject from a SWRO unit fed on NF product.

**BRIEF DESCRIPTION OF THE DRAWINGS**

The figures are graphs or flow diagrams related to the data presented in the text. More detail description of the figures will be found in the discussion of the data.

Figure 1 is a graph showing the seawater desalination process separation of feed into product and reject and the concentration in the reject of turbidity, bacteria, hardness ions and TDS in the various seawater desalination (thermal or membrane) processes.

Figure 2 is a graph of main problems in the various seawater desalination processes.

Figure 3 is a graph showing the effect of seawater feed TDS on osmotic pressure and the net effective pressure ($P_{net}$) driving permeate through membrane.

Figure 4 is a schematic flow diagram showing the configuration of NF pretreatment unit operated in two stages with turbocharger energy recovery system in between the stages linked to the thermal unit of MSFD or MED or VCD or RH, where the NF product constitutes the make-up to the thermal Unit.

Figure 5 is a schematic flow diagram for a trihybrid thermal desalination system utilizing NF and SWRO units each in two stages with energy recovery turbocharger in between the stages where the SWRO reject constitutes the make-up to a thermal unit of MSFD or MED or VCD or RH.

Figure 6 is a schematic flow diagram showing the arrangement of the di NF-MSFD, the di NF-SWRO and trihybrid from NF, $SWRO_{reject}$ and MSF in NF-Seawater desalination (SWRO and MSF) pilot plant, where each of the NF and SWRO unit comprises one stage only.

Figure 7 is a schematic flow diagram for the commercial Umm Lujj SWRO plant, (a) SWRO arrangement of the plant as built 1986 (Train 200), (b) The NF-SWRO arrangement as converted to NF-SWRO system, (one stage each of NF and SWRO), and operated Sept. 2000 (Train 100).

Figure 8 is a photo showing the Umm Lujj NF-SWRO plant (Train 100) as converted to the new dual NF-SWRO hybrid desalination system in September 2000, with the installed NF unit in front linked to it SWRO unit in back of the photo.

Figure 9 Performance of NF membrane unit at Umm Lujj NF-SWRO Train 100 at the fixed NF product recovery of 65%.

Figure 10 is a diagram showing the composition of seawater feed and the NF product of the same seawater feed to NF unit, with emphasis on their content of scale forming hardness ions ($SO_4^=$, $Ca^{++}$, $Mg^{++}$, $HCO_3^-$), $Cl^-$ and TDS along with their ionic rejection (%) by the NF membrane.

Figure 11 is a flow diagram showing the performance and operating condition for SWRO unit Train 100 in fully integrated NF-SWRO system shown in Figure 7. Notice ratio of product from Train 100 (NF-SWRO) to that from Train 200 (SWRO) is about 1.4 -1.6 : 1.

Figure 12 is a schematic flow diagram for the present optimal fully integrated seawater desalination process comprising $NF_{(2\ stages)}$-$SWRO_{(2\ stages)}$ with turbocharger in between the 2 stages in each of NF and SWRO units.

Figure 13 is a flow diagram showing NF elements performance utilizing a pilot plant having 3 different pressure vessels arrangement, each pressure vessel containing 2 NF 8" x 40" elements.

Figure 14 is plot showing concentration of : hardness ions ($Ca^{++}$, $Mg^{++}$), $SO_4^=$, and $HCO_3^-$, total hardness, TDS and $Cl^-$ in seawater and its NF product from different NF membrane.

Figure 15 is a plot of NF performance as a first NF stage vs operation time (9000 hrs) using two pressure vessels arranged in series, each vessel contains two NF elements.

Figure 16 is a plot of NF unit performance as measured by product (a) flow, (b) recovery, (c) conductivity at various operation conditions of pressure, temperature, feed flow and feed TDS.

Figure 17 is a plot for SWRO unit performance (permeate (a) flow, (b) recovery, and (c) conductivity) versus applied pressure with and without NF seawater pretreatment (NF and SWRO each consists of one stage only).

Figure 18 is a plot showing that raising thermal unit (MSFD) brine temperature operation increases both gain output ratio (GOR) and performance ratio (PR) in addition to it decreases energy (E) consumption.

**DETAILED DESCRIPTION AND PREFERRED EMBODIMENTS**

The present optimal seawater desalination invention will be best understood by first considering the various components and properties of saline water, and especially of seawater. Seawater, as mentioned earlier, is characterized by having high TDS, a high concentration of hardness due to presence of the scale forming hardness ions of Ca++, Mg++, $SO_4^=$ and $HCO_3^-$ at relatively high concentration, varying degrees of turbidity in the presence of particulate matter, macro and microorganisms and a pH of about 8.2. Many of the problems and their effect on limitations in seawater desalination are related to those seawater qualities and what it (seawater) contains of foreign substances. Typically seawater will have a cation content on the order of 1.2%-1.7%, of which typically some 900-2100 ppm will be "hardness" cations, i.e., calcium and magnesium cations; an anion content of scale forming hardness ions, i.e., sulfate and bicarbonate, in the order of 1.2%-2.8%; a pH on the order of 7.9-8.2; although wider ranges of one or more of these properties may be present, to constitute a total dissolved solids content on the order of 1.0%- 5.0%, commonly 3.0%-5.0%. However, it will be recognized that these components and properties vary throughout the world's oceans and seas. For instance, smaller enclosed seas in hot climates will normally have higher salinities (ionic content) than open ocean regions, e.g., Gulf versus ocean sea composition as shown in Table 1.

One major problem in seawater desalination, particularly for SWRO processes, is the sea water feed high TDS. The feed osmotic pressure increases as the feed TDS is increased. At a given applied pressure (P appl.), this increase in osmotic pressure (Pπ) , of about 0.7 bar/1000 ppm increase in TDS, reduces the available pressure $P_{net}$,

$$P_{net} = P\ appl. - P\pi \qquad\qquad (1)$$

Where $P_{net}$ is the pressure driving the water through the RO membrane to yield the permeate flow. To increase $P_{net}$ and consequently the permeate flow requires a higher applied pressure provided the membrane strength allows. The effect of varying feed TDS on osmotic pressure and $P_{net}$ pressure in a SWRO process at a temperature of 25°C and an applied pressure of 60 bar and final brine TDS of 66,615 ppm was shown earlier in Figure 3. The available useful pressure to drive the water through the membrane is marked by the shaded area of $P_{net}$, which decreases as the feed TDS increases. Since the permeate flow through the membrane is directly proportional to the water driving pressure $P_{net}$, reduction of seawater feed TDS by the present process not only reduces wasted energy but also increases the fresh water permeation through the membrane. As will be illustrated below, this case of lowering energy requirement per unit water product by lowering TDS of feed, which leads to an increase in $P_{net}$ and SWRO unit permeate flow, is a principal advantage effect obtained by the present process.

Likewise, turbidity (reflected by total suspended solids and microorganisms) of a small area of a sea or ocean, such as the area from which a desalination plant would draw its seawater feed, will be dependent upon the local concentration of organisms and particulates, and even within the same area such concentrations can and often do change with weather, climate and/or topographical changes. Typical values are shown in Table 1, and illustrate the sea water variation between typical open ocean water, Mediterranean sea, and water of an enclosed "Gulf sea (sometimes referred to hereinafter as "ocean water" and "Gulf water" respectively). While "ocean water" is often taken as the basis for standard (normal) seawater properties, for the purposes of discussion herein, it will also be recognized that the components and properties of the world's oceans and seas are substantially similar everywhere, and that those local variations which do occur are well understood and accommodated by persons skilled in the art. Consequently the invention described herein will be useful in virtually any geographical location, and the description below of operation with respect to Gulf water or ocean water should be; considered exemplary only and not limiting.

The presence of particulate matter (macroparticles), microorganisms (e.g., bacteria) and macroorganisms (mussels, barnacles, algae) requires their removal from feed to both SWRO and thermal desalination plants. Removal of turbidity and fine particulates normally defined as total suspended solids from feed destined to SWRO plants has been essential but has not been restrictedly required for the thermal processes. Removal of the chlorine from feed to chlorine sensitive NF and SWRO membranes has also been a most requirement.

The third major problem which, as already repeatedly indicated, is inherent in all prior art desalination processes, is the high degree of hardness ions in seawater and is of higher negative effect in thermal than in membrane processes.. Since all desalination processes operate to extract fresh water from saline water, salts and hardness ions are left behind in the brine with the effect that both the brine TDS and hardness concentrations are increased. This was illustrated in Figure 1. Because hardness ions are sparingly soluble in seawater, it is common for them to precipitate in the form of scale within the desalination equipment, e.g., on tubes, membranes, etc., thus limiting water recovery to low values, for example to 25-35% or less for desalinated Gulf seawater and up to 30-40% in ocean seawater. Depending on the desalination process operating conditions, two types of scale form: an alkaline soft scale principally composed of $CaCO_3$ and $Mg(OH)_2$ and a nonalkaline hard scale principally composed of $CaSO_4$, $CaSO_4$, $\frac{1}{2}H_2O$ and $CaSO_4,2H_2O$. The formation of the latter form becomes exaggerated at higher temperature, since the $CaSO_4$ solubility decreases as the solution temperature is increased. In the past, operators of MSFD or other thermal desalination plants, such as MED plants, commonly added acid and/or other antiscaling additives to the feed water, to limit process operation at brine temperatures of 90-120°C for MSFD and 65°C for the MED plants without scale formation. However, in spite of this, product fresh water recovery as a fraction of product to make-up feed from Gulf seawater was low 25% to 35% or less. For higher operating temperatures, ion exchange was required to remove $SO_4^=$ or $Ca^{++}$ and obtain higher water recovery Similarly, in SWRO operation antiscaling agents have also been commonly added to prevent membrane or plant scaling, but again water recovery by the conventional processes, for example for Gulf seawater, is again to be limited to about 25-35% or less. In addition, antiscaling agents are normally returned to the marine environment either as part of the brine discharge or during descaling operations. Such materials are usually contaminants in the marine environment, and as such would be better avoided.

These problems in seawater desalination and measures used in the past to alleviate them were summarized and presented earlier in Table 2 along with the quality requirements of feed to SWRO plant where the feed is taken from an open sea (surface) intake. The two stage NF feed pretreatment process used with or without proper antiscalant in this invention is able to efficiently and economically remove turbidity, hardness ions and lower TDS for which the present process can do at high NF product recovery ratio higher than that expected from prior art, and thus it will be seen that the present process represents a marked improvement over the conventional and other prior art seawater desalination processes. Moreover, removal of hardness ions will serve also in raising recovery in all types of seawater desalination processes (membrane or thermal).

In brief, the present optimal seawater thermal desalination process significantly reduces hardness, lowers TDS in the membrane steps, and removes turbidity from the feed, thus lowering of energy and chemical consumption, increasing water recovery and lowering the cost of fresh water production from seawater. This is achieved by the unique combination of NF with SWRO or with thermal desalination unit in di- or trihybrid systems as already explained in earlier sections, each of NF and SWRO units in two stages with energy recovery turbocharger in between as shown for illustration in Figures 12, or the two stage NF with MSFD, MED or VCD, RH (Fig. 4) or alternatively combining the NF, SWRO with thermal in a tri $NF_{(2\ stages)}$ - $SWRO_{2\ reject}$ - thermal as shown in Figure 5, which can be further enhanced by additional combination with media filtration, and depending on feed quality with and without coagulation or using a subsurface intake such as beach wells for collection of the seawater or the use of MF or UF membrane pretreatment of the feed.

Nanofiltration, SWRO and the various thermal seawater desalination have all been described extensively in the literature and commercial installations of each exit. Therefore detailed descriptions of each step, the equipment and materials used therein and the various operating parameters need not be given here in detail. As typical examples of comprehensive descriptions in the literature, reference is made to Kirk- Othmer, ENCYCLOPEDIA OF CHEMICAL TECHNOLOGY, 21:327 -328 (4th Edn.: 1991) for nanofiltration; *ibid*, pp. 303-327, for SWRO; and McKetta et al. , ENCYCLOPEDIA OF CHEMICAL PROCESSING AND DESIGN, 16: 198-224 (1982). and Corbitt, STANDARD HANDBOOK OF ENVIRONMENTAL ENGINEERING, 5-146 to 5-151 for RO.

With the basic concepts of NF, SWRO, and thermal units described and understood, the details of the steps of the work done on coupling NF to SWRO with full integration in two stages for each of NF and SWRO or NF two stages combined and fully integrated with, for example, MSFD can be best understood by reference to the experimental work, which was done on a pilot plant scale. A schematic flow diagram of one single stage NF combined in one single stage SWRO to form on NF-SWRO process is given in Figure 6. The process consists of seawater supply system to a pretreatment consisting normally of dual media filter followed by a fine sand filter, 5 micron cartridge filter, feed tank, the two stage NF unit and the two stage SWRO unit. The particle size of sand in the sand filter may vary, and is normally on the order of 0.3-1.0 mm. The pretreatment part of this system, although, is retained in this new invention but not shown for the dual $NF_{(2\ stages)}$- thermal or $NF_{(2\ stages)}$ - $SWRO_{(2\ stage)}$ Thermal ((Figs. 4 and 5). This filtration process is omitted from the process when the seawater feed is taken from an efficiently constructed beachwell or form microfiltration (MF) or ultrafiltration membrane (UF) pretreatment.

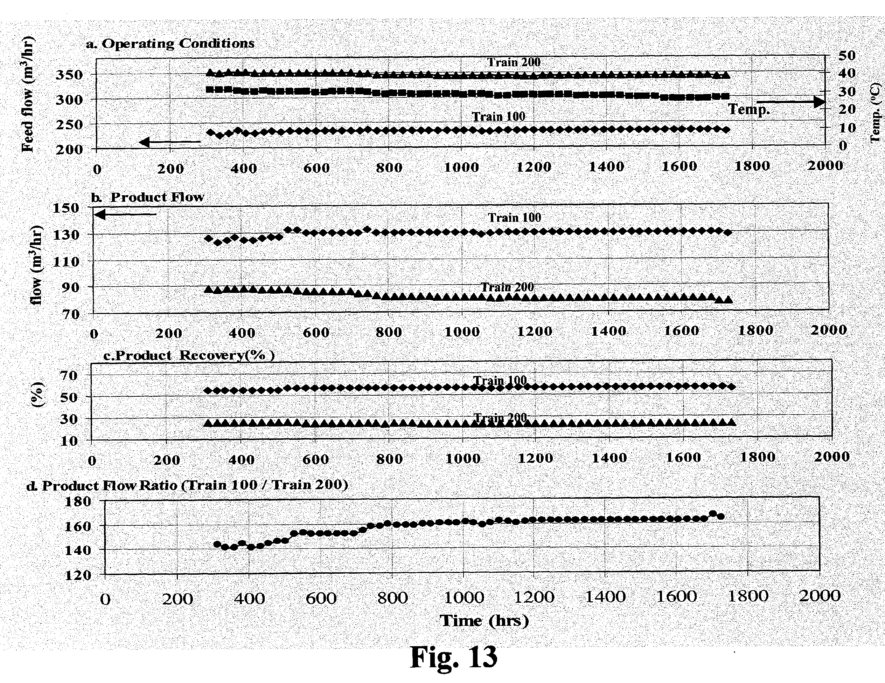

In commercial SWRO or NF plants the membrane elements are normally arranged in series of six elements per pressure vessel. This type of membrane arrangement is the preferred arrangement in many of the commercial NF and SWRO plant worldwide. This is also the arrangement of NF and SWRO elements used in operation of the dual NF-SWRO in the commercial Umm Lujj SWRO plant, which is shown in Figures 7 and 8. To establish the performance of the six elements within one pressure vessel, a demonstration unit was built utilizing three pressure vessels each fitted with 2 NF elements (8" x 40") instead of the six elements (8" x 40") per one pressure vessel as shown in Figure 13, The performance of each two elements within the 1st : 2nd : rd pressure vessel were as shown in same figure and were in the ratio of :

| | | | | | |
|---|---|---|---|---|---|
| Product flow | 4.61 | : 3.3 | : 1.32 | for a total of | : 9.28 m³/h |
| Product recovery | 38% | : 28% | : 11% | for an overall recovery of | : 78% |
| Product TDS | 28,000 | : 35,000 | : 40,000 | for a combined product | : 32,270 ppm |

from a feed of 11.95 m³/h having TDS of 45,000 ppm at an applied pressure of 25 bar and T = 30 °C. For each vessel, the product recovery ratio is computed as the ratio of NF product to the total feed of 11.95 m3/h. As shown in the same figure the two elements within the 3rd vessel are highly stressed; they receive at P = 24 bar feed of only 3.99 m³/h having TDS = 69,100 ppm or one third the feed, for example of 11.95 m³/h for the first two elements, which are fed on seawater, TDS = 45,000 ppm, at P = 25 bar, when higher pressure is required for their operation to overcome the increase in third vessel elements feed osmotic pressure.

To remove this large stress, or part thereof, on the final two elements within the third vessel and in order to increase the efficiency of the NF process, an arrangement such as shown in Figure 4 for the NF unit was utilized in this invention. In this arrangement, the NF process is conducted in two stages with energy recovery turbocharger in between. This arrangement does two functions: it increases product flow and water recovery and as shown later, reduces the energy consumption per unit water product. Number of elements ratio in the first: second NF stages is made in the order of the ratio of about 2 : 1. Furthermore, with this arrangement at a first stage NF recovery of about 50%, each element within the first and second NF stage receives nearly the same amount of feed and with the elements in second stage receiving nearly same amount of feed as that delivered to the first stage elements but higher feed when the SWRO recovery ratio for the 1st stage is less than 50%. The first stage, which is fed on seawater at P = 25 ± 10 bar, comprises for illustration two NF blocks in parallel, here a block, depending on seawater feed quality (TDS), consists of a number of pressure vessels, arranged in parallel, each pressure vessel is fitted with 4 NF elements. A total of 5 to 6 elements could be utilized within one pressure vessel if the feed TDS is of ocean quality or less. Meanwhile, the second stage comprises one NF block having about one half the number of modules as that within the first stage blocks. All modules are arranged in parallel and each consists of one pressure vessel fitted with 4 NF elements. The NF elements of the first and second stage could be of the same type, if they can tolerate high pressure up to 35 ± 10 bar, or the second stage NF elements are chosen to be of higher pressure tolerance, up to 45 bar, more than that which can be tolerated by the first stage NF elements. The second stage NF unit is fed on the combined reject from the first stage modules after its pressure is being boosted by the turbocharger from 25 ± 10 to 35 ± 10 bar. The second stage pressure, if needed, can be raised (boosted) further as shown in Figures 4 and 5, by use of a booster pump that is capable of receiving the first stage reject, after being boosted by the turbocharger, and boosts it further to the desired pressure value. The turbocharger pressure boost (ΔP) equals (Pump Engineering, Inc. Manual # 299910) :

$$\Delta P_{tc} \quad = \quad (nte)\,(R_r)\,(P_r - P_c) \tag{2}$$

nte = the hydraulic energy transfer efficiency
$R_r$ = ratio of brine flow to feed flow to turbocharger
$P_r$ = brine pressure to turbocharger
$P_c$ = brine pressure leaving turbocharger

For example, the case shown in Figure 12, the calculated ΔP for the SWRO unit equals 37.5 bar (0.65 x 0.65 x 83 = 37.5 bar).

Arrangement of the NF(2 stages) - SWRO(2 stages) can be illustrated by Figure 12. The NF unit is made of a high pressure pump to provide up to 25 ± 10 bar pressure to the first stage NF unit, which consists of two modules arranged in parallel. As previously mentioned, a module consists of one pressure vessel containing four NF of 8" x 40" membrane elements or other dimension. NF membranes may be spiral wound, hollow fine fiber, tubular or plate configuration, although nearly all commercial NF membranes are thin film composite types and are made of noncellulosic polymers with a spiral wound configuration. The polymer is normally a hydrophobic type incorporating negatively charged groups, as described for instance in Raman et al., *Chem. Eng. Progress.* 7(1):58 (1988). The seawater feed is supplied at ambient sea water temperature to the first stage modules and their combined pressurized reject is fed to its following second stage modules also having 4 NF elements per module, after boosting its pressure to $35 \pm 5$ bar; by the turbocharger fixed in between the two stages as shown for illustration in Figure 10. Pressure more than 40 bar, if needed, can be raised by the booster pump. Number of modules in the second NF stages is equal to about one half or there about their number in the first NF stage. The seawater feed pretreatment unit has the same components and arrangement as those in the feed pretreatment given in Figure 6. Alternatively, direct feed from beachwell, without need for a pretreatment unit, or from an MF or LTF membrane pretreatment will do.

The combined NF product from first and second NF stage is fed to SWRO unit comprising (1) one high pressure pump to provide pressure of $50 \pm 10$ bar to (2) first stage SWRO consisting of a block of modules arranged in parallel, and consists of membranes of the type used in conventional SWRO plant, e.g., Toyobo or Toray or Hydranautics or Filmtec or DuPont membranes, etc. and (3) the pressurized reject collected from the first stage SWRO modules is passed through the turbocharger to boost its pressure to about $85 \pm 5$ bar followed by feeding this pressurized reject to (4) second stage SWRO unit made of one block of SWRO module where each module consists of one pressure vessel fitted with 4 upto 6 SWRO elements of high pressure tolerant, brine conversion, for example, Toray 820 BMC or equivalent SWRO membranes. By the use of turbocharger, and booster pump if needed, the pressure can be raised up to 90 bar. The combined product from the two SWRO stages is collected and comprises a final product with potable water qualities while SWRO reject in which hardness is dramatically reduced is used as illustrated in Figure 5 as make-up to the thermal unit.

The MSFD unit arrangement can be illustrated as an example for the arrangement of other thermal desalination units in the di- and tri-hybrids. The MSFD unit consists of three sections: (1) heating section, (2) flash and heat recovery (HRC) section and (3) the heat rejection (HRJ) section plus other accessories: the deaeriator, brine circulation (BR) pump, etc. (see as an example the MSF pilot plant arrangement shown in Figure 6). Commercial MSF plants have the same layout, but with much greater number of stages for the flash and heat recovery section of 10 - 20 stages or higher. In the heating section steam from the boiler, or low pressure steam from electric generator, heats the seawater passed through the brine heater vessel in a bank of tubes and the steam condensate is returned back to the boiler. The heated seawater flows into the first stage vessel of the flashing heat recovery section where the ambient pressure is controlled to allow for the heated seawater to flash (boil vigorously at an explosion rate). A small percentage of the heated water is converted to steam, which condenses on the tube releasing the latent heat, thus heating the water in the heat exchanger tubes passing through the stage. The condensed vapor is collected into distillate fresh vapor product, while the brine (seawater with high salt concentrated) flows to the second stage operated at controlled but lower ambient pressure than the first stage. The process of flashing, vapor condensation and brine flow to the following stage is repeated through the various heat recovery stages after which the brine from the last stage flows into the heat rejection stage where it is cooled before part of it is discharged as concentrated brine blow down (B.B.) and the remaining part is recirculated back into the evaporation process through the flash and heat recovery section.

As illustrated in Figure 4 (for $NF_2$ - Thermal) and Figure 5 (for $NF_2$ - $SWRO_2$ reject - thermal) where for example the thermal unit is an MSFD or MED or VCD or RH unit which receives NF product or SWRO reject or combination thereof as make-up to separate this make-up into product (distillate) and brine blow down. Similarly, the same argument can be extended to any of the thermal desalination units where in Figure 5, the thermal unit is any of the other seawater thermal desalination units of MSFD or MED or VCD or RH. The thermal unit performance is now dependent on operating conditions without TBT limitation imposed on it in the conventional thermal processes. The MSF unit, because of removal of scale forming hardness ions (especially sulfate and bicarbonate, which can be completely depleted or reduced to a very low concentration level by the NF pretreatment) can be operated now at a much higher TBT than their limit value of 120°C for MSFD and also at much higher TBT than about 70 °C limit for MED, or VCD or RH unit.

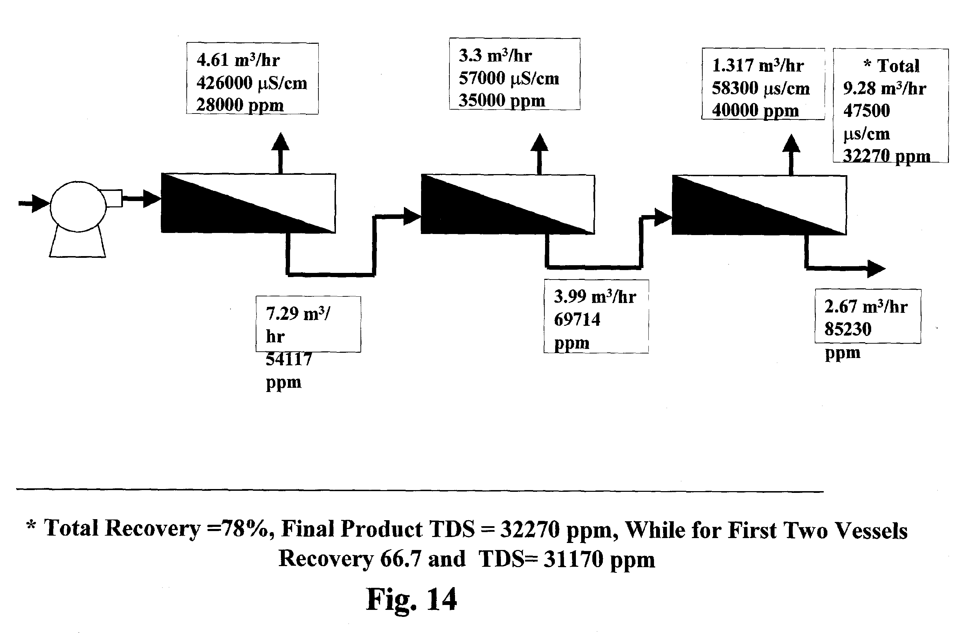

From field investigation of commercially available NF membranes done at our R&D it was illustrated that they are vastly different in performance and can be classified, more or less, into three groups : Group "A" tight structure NF membrane characterized by having high rejection , but low permeate flow (flux) in contrast to Group "C" of high flow and modest ion rejection particularly TDS, while Group "B" has good balanced performance of permeate flow and ionic rejection (Hassan et al. IDA World Congress on Desalination Proceeding, Oct. 1999). Nearly all NF membranes have excellent sulfate rejection of over 90% and good bicarbonate rejection, which can be further reduced to acceptable level by acid pretreatment of feed to $NF_2$ unit, or by post-treatment of the NF product. They, however, differ in the rejectijon of $Ca^{++}$, $Mg^{++}$, $Cl^-$ and TDS (Fig. 14). As a result of this investigation, membrane of Group "B" were successfully utilized in the dual NF-SWRO operation of Umm Lujj SWRO plant (Hassan et al., IDA World Congress on Desalination Proceeding, Oct. 2001). Same type of NF Group "B" and/or selected NF membrane of Group "C" are being utilized in the present invention in the first stage NF vessels in a plant of this invention with the NF and SWRO arrangement as shown in Figures 4 and 5. Group "B" type membrane with a higher pressure tolerance membrane are utilized in the second stage NF unit.

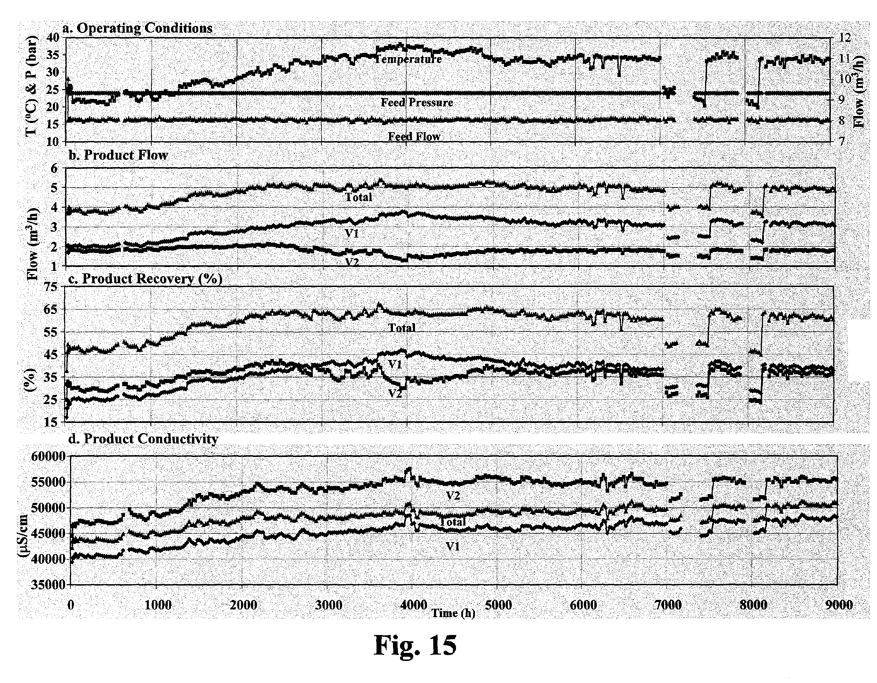

As illustrated earlier, by utilizing a demonstration plant consisting of three pressure vessels, each containing 2 NF 8" x 40" membrane elements of Group "B" of NF membrane, a product recovery ratio of 66% was achieved from the first and second module elements at P =25 bar, at feed of about 12 m$^3$/hour and T = 30°C (Figure 13). While only a recovery ratio of about 62% was achieved when operating same four elements with same NF membranes in a repeated trial but at feed of 8 m$^3$/h, P = 24 bar and T = 28°C (Fig. 15). An NF product flow of about 5.1 to 5.2 m$^3$/h was obtained from 8 m$^3$/h feed for a product recovery of about 62% was maintained from this first stage NF unit as far as the NF feed quantity, its temperature and pressure are maintained constant, which they also provide constancy in product conductivity (Fig. 15). Control of feed temperature to about 35°C was done by blending part warm seawater (43 °C) used in cooling the MSF distillate in heat rejection section of MSF unit with the appropriate part of seawater (18-25 °C) (see Figure 6). Variation in NF unit performance with variation in feed temperature is vividly illustrated in Figure 15 when the NF unit was operated on seawater feed alone (18-25 °C) without this blending process.

As shown in Table 3, the scale forming hardness ions rejection of $SO_4^=$, $Mg^{++}$, $Ca^{++}$ and $CHO_3^-$ by NF elements of the first vessel were : 99.9, 98.3, 96.8 and 84.4%, respectively, as compared to 99.9, 98.3, 96 and 78% for the hardness ions ionic rejection by same type of NF membrane elements in second vessel. In some trail the $SO_4^=$ ions were not detected at all in the product of NF elements in first and second vessels. It is noticed that the scale forming hardness ions rejection of $SO_4^=$, $Mg^{++}$ as well as total hardness ( for $Ca^{++}$ and $Mg^{++}$) which is above 98% is nearly in the same order for NF elements in the first and second vessels product and is similar for the rejection of $Ca^{++}$ ions. However, there is difference in the rejection of $HCO_3^-$ between the NF elements of vessels one and two (Table 3), which can be reduced to the desired level by acid post-treatment of the NF product or control of acid addition to the pretreatment section in Figure 6. The NF hardness ions rejection established in this trail are similar to those established earlier at Umm Lujj plant where same type of 6 NF elements were placed in one pressure vessel (Figure 10). Product water recovery as compared to feed of about 8 m$^3$/h was 36.3% and 25.6% for the former elements in first and second pressure vessel, for a total of about 62% from the 4 elements.

**Table 3. Chemical Composition and Physical Properties of Seawater, NF Filtrate and NF Salt Rejection**
(vessels 1 and 2 are operated in series)

| Element/Parameter | Seawater Ion Conc. | NF Filtrate (Vessel 1) | | NF Filtrate (Vessel 2) | |
|---|---|---|---|---|---|
| | | Ion Conc. | Rejection % | Ion Conc. | Rejection % |
| **Hardness** | | | | | |
| $Ca^{++}$ (ppm) | 481 | 16 | 96.8 | 20 | 96 |
| $Mg^{++}$ (ppm) | 1608 | 27 | 98.3 | 27 | 98.3 |
| Total Hardness (ppm) | 7800 | 150 | 98 | 160 | 97.9 |
| $SO_4^=$ (ppm) | 3200 | 1 | 99.9 | 1 | 99.9 |
| $HCO_3^-$ (PPM) | 128 | 25.1 | 84.4 | 34 | 78 |
| **Others Ions** | | | | | |
| $Cl^-$ (ppm) | 24100 | 15561 | 35.6 | 18367 | 23.8 |
| **Dissolved Solids** | | | | | |
| TDS (ppm) | 44046 | 25240 | 42.7 | 31,400 | 28.7 |
| Product follow (m$^3$/h) | - | 2.89 | - | 2.02 | - |

By comparison to the superior rejection of NF membrane to hardness ions, the rejection of the monovalent $Cl^-$ ion is only 35.6 and 23.8% for NF elements in vessels one and two, respectively, while their TDS ionic rejection was 42.7 and 31.4%, respectively, in support of earlier argument that NF rejection is much greater for covalent hardness ions than that of its rejection of monovalent ions, while RO (BWRO, SWRO, LPRO and loose RO) have, more or less, same rejection for mono and covalent ions.

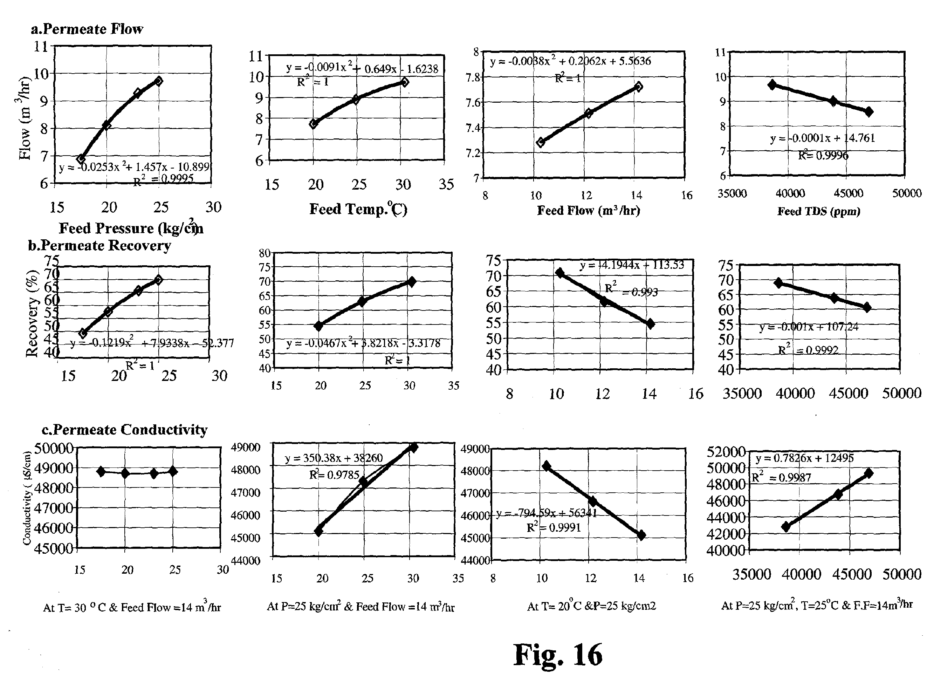

From above results and as shown in Figure 16, the NF performance is dependent on operating conditions of applied pressure, operating temperature, feed flow (quantity) and quality (TDS). By control of those operating conditions, it can be concluded that a recovery ratio of about 62% or better can be obtained, as already established, from first NF stage in an NF pretreatment unit having an arrangement as shown in Figures 4 and 5. Further more, a recovery of about 35% was easily obtained from the reject of the NF first stage when it is fed to the second stage of the same figure, bringing the overall recovery from the two stages to 75%. At total recovery of 77% was achieved at the pilot plant from two stage NF unit, when the first stage was operated at 25 bar, recovery 62% and the second stage recovery was 40%. Feed consisted of Gulf seawater, TDS ≈ 45,000 ppm. The NF product recovery rose to 80% upon raising the pilot plant feed to 9 m³/h from 8 m³/h as done at the above 77% recovery, while maintaining the same pressure of 25 bar. This recovery, even a slightly higher recovery value, can be obtained from the $NF_{(2stages)}$ unit operated on Gulf seawater (TDS 45,000 ppm, by the addition of proper antiscalant to the feed. This compares to, as mentioned earlier, up to a 70% NF product recovery which was obtained from 6 elements arranged in series within same pressure vessel at Umm Lujj plant [Hassan, A.M. IDA World Congress Proceedings, Bahrain, March, 2002].

Full integration of the $NF_2$ stage with thermal unit, can be illustrated by passing all the $NF_2$ product in Figure 4 to thermal unit, distillate water recovery ratio of 65-75% was obtained earlier from MSF pilot plant unit operated on NF product at TBT of 120°C (Hassan, et al, Desalination 118 (1998) p. 35-51). Higher recovery ratio of better than 70% was obtained later on at the same pilot plant. The same distillate recovery ratio of about 71% was obtained when the thermal unit (MSFD) in Figure 4 was also operated at TBT of about 125°C on make-up consisting of NF product. The total expected distillate product from initial seawater feed of 316 m³/h to a dual NF-thermal system is 170 m³/h for an overall recovery of 54% (Figure 4).

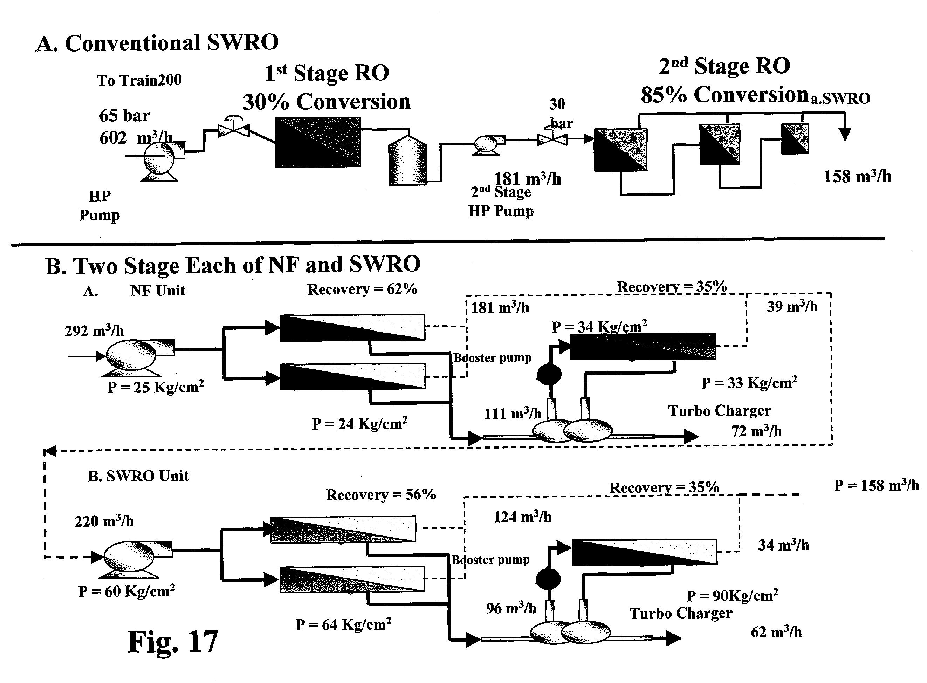

Better recovery yet is realized from the trihybrid $NF_2$-$SWRO_{2reject}$-thermal operation, as illustrated by the arrangement shown in Figure 5, where an overall recovery of about 60% or better can be achieved. The SWRO unit is also operated as shown in same figure, in two stages with turbocharger in between the dual NF-SWRO desalination system. This becomes quite feasible and applicable when considering the use of lately developed SWRO high pressure, membranes. At the SWRO pilot plant level a water recovery of 60% was achieved when the plant was operated on NF product at an applied pressure of 50 bar, rising to 80% recovery at an applied pressure of 70 bar (Figure 17). Similarly, a water recovery ratio of 56-58% was achieved at Umm Lujj SWRO Train 100 operated only in one stage on NF product (see earlier references under Hassan, et al.).

Assuming as shown in Figure 5 a water recovery for first stage SWRO of 52% a total of 19,500 m³/d is achieved from the first stage of NF product feed of 37,500 m³/d as compared to only 6480 m³/d obtained from the second stage SWRO at the water recovery of 36% and pressure of about 92 bar, for a total SWRO product water of 25,980 m³/d from 37,500 m³/d of NF product as feed, or for an overall SWRO recovery for the stages of over 69%. Because of the high pressure applied to the second SWRO stage with very low hardness ions content a higher recovery than 71% is expected from the two stage SWRO unit. This brings the overall $NF_{(2\ stages)}$ - $SNVRO_{(2\ stages)}$ desalination hybrid overall final product recovery to about 52% (0.75 x 0.69).

Further water recovery in the form of distillate, up to 70% of the SWRO reject can be achieved by making the SWRO reject from the above case into make-up to thermal unit (see Figure 5). The SWRO reject from the second stage, however, is about 91,900 ppm making it difficult to obtain 70% recovery from the thermal unit. To avoid this problem, and to limit the thermal unit blow down to an acceptable TDS level of 140,000 ppm, which was proved experimentally at the pilot plant without causing scaling, the reject from SWRO unit in this case of 11,625 m³/d is blended as shown in Figure 5, with 37500 m³/d NF product and the combined blend of 49,125 m³/d is made make-up to the thermal unit. Again, at 69% recovery, the thermal unit recovery from this blend of SWRO reject plus NF product, the total distillate will be 33,895 m³/d and total output of the trihybrid unit, made of SWRO permeate plus thermal unit distillate, is 59,775 m³/d for a total plant water recovery of about 60%. Thus, the desalination plant operation in trihybrid arrangement enhances the plant potable water recovery to about 60% compared to only 52% by the use of di NF-thermal arrangement. Raising thermal unit top brine temperature operation increases both gain output ratio (GOR) and performance ratio (PR) and as shown in Figure 18 also decreases energy consumption with the beneficial consequences of lowering water production cost.

In addition to the gained benefits of increasing plant productivity, both water flow and product recovery, along with lowering of energy requirement and water cost per unit water product, this optimal dual $NF_2$ - thermal and $NF_2$-$SWRO_2$ reject - thermal or alternatively $NF_2$ - $SWRO_1$ reject - thermal seawater desalination processes by use of any thermal desalination unit (MSFD or MED or VCD or RH) have the following advantages:

(1) Because of the significant reduction in hardness and the consequent reduction or elimination of scaling, it is no longer necessary to add antiscaling chemicals to the feed to the SWRO or thermal desalination processes as was done in prior art systems to prevent scale formation. This of course, is a significant advantage from an environmental standpoint, since such chemicals, are no longer discharged into the marine environment or deposited in land-based sludge or water reservoirs.

(2) Moreover, because of the high purity of NF product in that it contains no suspended solids or bacteria, the differential pressure across the SWRO membrane ($\Delta P$) remains very low and, therefore, the SWRO membrane will not be fouled. This should lead to a longer life of SWRO membrane (when used in the trihybrid) as well as it continues to maintain a sustained high efficiency membrane performance, and without frequent cleaning.

(3) Because of the high quality of the SWRO product, i.e., potable water quality produced by this dual $NF_2$- $SWRO_2$ process as part of the trihybrid thermal system, a second stage RO unit is not required as normally done in the conventionally operated SWRO plants, where this second stage is required to produce the good water quality with TDS <500 ppm. Furthermore, the blending of the permeate with distillate allows for the acceptable of high TDS permeate product and again the extension of SWRO membrane life.

(4) One major advantage of the present trihybrid of $NF_2$- $SWRO_{2\ reject}$ - thermal process is in the good quality of the SWRO reject, which qualifies it as a make-up to thermal seawater desalination plants. Besides its high clarity in absence of suspended solids and bacteria, as shown in Table 4, it contains low concentration of the scale forming hardness ions of $SO_4^=$, $Mg^{++}$, $Ca^{++}$, and $HCO_3^-$.

The further utilization of this product in a trihybrid desalination system of NF-$SWRO_{reject}$-MSDD or MED or VCD or RH, where each of NF and SWRO are operated in two stages, enhances the overall water recovery ratio of the process.

**Table 4. Chemical Composition of Gulf Seawater, NF Permeate and SWRO Reject from the Optimal $NF_{(2\ stages)}$-$SWRO_{(2\ stages)}$ Desalination System**

| Parameters | Gulf Seawater | NF Permeate Average[1] | SWRO Reject[2] |
|---|---|---|---|
| Calcium (ppm) | 481 | 25 | 83.5 |
| Magnesium (ppm) | 1608 | 35 | 116 |
| Sulphate (ppm) | 3200 | >2 | >6 |
| $M_{alk}$ as $CaCO_3$ (ppm) | 128 | 15 | 50 |
| Total Hardness as $CaCO_3$ (ppm) | 7800 | 210 | 700 |
| [1] from actual measurement, [2] Computed from product water recovery of 70% | | | |

(5) The energy consumption/$m^3$ product for the present process invention (membrane part only): energy consumption/$m^3$ for a one million gallon plant of this $NF_2$- $SWRO_{2\ reject}$ - thermal : conventional SWRO is in the ratio of 0.44 : 1. The energy consumption ($KWh/m^3$) of this process invention for $NF_2$ - $SWRO_2$ part of the trihybrid is about 44% of that required by the conventional SWRO system operated without NF pretreatment. The energy requirement was calculated from Eq. 3:

$$\text{Energy (KWh/m}^3) = [Q_f. H_f \rho/366\ Q_p e] \qquad (3)$$

Where :

- $Q_f$ and $Q_p$ are the quantity of feed and product in $m^3$/hr, respectively.
- H is the pressure head in (m),
- $\rho$ density of seawater (1,03), and
- e pump efficiency ($\approx 0.85$).
  (see - Water Treatment Handbook, 1979, A Halsted Press Book, John Wiley & Sons, (Fifth Edition). See also " Pump Handbook (Second Edition), Igor J. Karassik William C. Krutzsch, Warren H. Franser and Joseph P. Messina. McGraw Hill, International Edition, Industrial Engineering Series).

To further illustrate the advantages of the present process, a commercial plant simulation was conducted utilizing the fully integrated optimal dual $NF_{(2\ stages)}$- Thermal plant design, for the production of one million US gallon per day (mgd) Gulf seawater feed, TDS $\approx$ 45,000 ppm. The NF recovery for Gulf water is set at $\approx$ 75%, while the thermal unit recovery operated at TBT $\geq$ its present limits was set at 72%, although higher distillate recovery of 80% or better were achieved. Table 5 illustrates the many advantages gained by the application of the present optimal $NF_{(2\ stages)}$-Thermal seawater desalination process invention over the conventional thermal process in recovery. The amount of reject (brine) is also less. The make-up to this one million U.S gallon/day plant by the conventional thermal process at the 35% distillate recovery is 451.4 $m^3$/h compared to only 292.6 $m^3$/h for the $NF_2$ -thermal one at the recovery of 54% for the feed ratio of 1: 0.65. Similar and even higher overall water recovery ratio than those shown in Table 5 can be achieved from the trihybrid arrangement $NF_2$ - $SWRO_2$ - Thermal, simply because higher recovery ratio is achieved from the trihybrid arrangement than that achieved from the dihybrid $NF_2$ - Thermal. As mentioned earlier, further water can be recovered in form of distillate and SWRO permeate, when the $SWRO_{reject}$ is made a make-up to one of the various thermal units of MSFD, or MED or VCD or RH.

In short, the present optimal process of this invention is of a much higher efficiency than that of the singly operated conventional thermal or SWRO seawater desalination processes. Additionally, these many advantages are not limited to its application in the desalination of Gulf seawater (TDS 45,000 ppm). Higher NF, thermal and SWRO product recovery ratios as well as an overall recovery of about 65% from dual hybrids and higher can be achieved when this process is applied in the desalination of ocean seawater (TDS 35,000 ppm). The amount of feed, reject as well energy requirement are expected to be significantly far less for the desalination of ocean seawater feed than those values in Gulf seawater feed desalination, mainly because of higher NF product recovery ratio of about 80% or better , especially when the proper antiscalant is added to the NF unit feed.

It will be evident that there are numerous embodiments of this invention which, while not expressly set forth above, are clearly within the scope and sprit of the invention. The above description is, therefore, to be considered to be exemplary only, and the actual scope of the invention is to be determined solely from the appended claims. Although, similar claims can be made for making the NF product from the two stage NF unit feed to two stage $SWRO_2$ as shown in Figure 12, the claims in this invention are limited only to the optimal dual $NF_{(2\ stages)}$ - Thermal and tri $NF_2$ - $SWRO_2$ reject -Thermal seawater desalination processes, where thermal unit can be an MSFD or MED or VCD or RH.

**Table 5. Summary of results of this optimal process $NF_{(2\ stages)}$- thermal and conventional thermal to produce one million gallon per day (3785 $m^3$/d or 158 $m^3$/h) of product water from Red Sea or Gulf Seawater**

| Parameter | $NF_{(2\ stages)}$-Thermal | Conventional MSFD | Ratio Thermal : Invention |
|---|---|---|---|
| Feed ($m^3$/h) | 292.6 | 451.4 | 1 : 0.65 |
| Product ($m^3$/h) | 158 | 158 | 1 : 1 |
| Reject blow down ($m^3$/h) | 134 | 293.4 | 1 : 0.46 |
| Recovery dihybrid* | 54% | 35% | 1 : 1.54 |
| Recovery trihybrid* | 60% | 35% | 1 : 1.71 |
| * Dihybrid $NF_2$ - thermal and trihybrid $NF_2$ - $SWRO_2$ - thermal | | | |

**Claims**

1. An optimal desalination process and apparatus which comprises passing saline water containing a high concentration of hardness scale forming ionic species, microorganisms, particulate matter and a high concentration of total dissolved solids through a two stage membrane nanofiltration ($NF_2$) unit with an energy recovery turbocharger (TC) unit in between the stages, supplemented as needed with a pressure boosting pump to form from the combined NF product of the first and second NF stages, a **first water product** or this first product can be produced from an NF unit with pressure boosting pump in between the stages, wherein this **first water product** can be produced from an NF unit equipped with an energy recovery pressure exchanger (PX) unit and in turn the NF unit itself consists of two stages with a pressure boosting pump in between the stages, wherein this **first water product** having reduced content of said ionic species and from which is removed microorganisms, particulate matter and nearly all scale forming hardness ions and thereafter passing said **first water product** through a thermal seawater desalination unit to produce a final **second water product** (distillate) and **brine discharge** (blow down).

2. A desalination process which comprises passing seawater containing a high content of hardness scale forming Ionic species, microorganisms or particulate matter and total dissolved solids through a two stage membrane nanofiltration ($NF_2$) unit as in Claim 1 to produce a **first water product** having a reduced content of said ionic species (TDS) and from which is removed microorganisms, particulate matter and nearly most of scale forming hardness ions and thereafter passing said first water product through a seawater reverse osmosis unit, made either of one or two stages, one stage SWRO equipped with an energy recovery PX unit and having high pressure tolerant membrane (P=84 bar), while the two stage SWRO unit is equipped with TC recovery energy from the brine as shown in Fig. 5, to form a **third water product (permeate) of potable quality** and a **fourth water product reject** having increased salinity but drastically reduced hardness, and thereafter passing said fourth water product reject through a thermal distillation unit to form a **second water product (distillate)** of **potable quality** and a **brine discharge blow down.**

3. A desalination process wherein Claims 1 and 2 the said **thermal distillation** unit comprises a multistage flash distillation **(MSFD)** unit or a multieffect distillation **(MED)** unit or a vapor compression distillation **(VCD)** unit, or a vapor compression multieffect evaporator thermal reheat **(RH)** unit.

4. An optimal desalination method and apparatus comprising as in Claims 1 and 2, a dual fully integrated $NF_2$ units equipped with energy recovery PX or TC system, in which the first NF stage comprising a high pressure pump and NF unit to produce under pressure (P) of 25 $\pm$ 10 bar an NF product and NF reject, the NF reject constitutes the feed to the second stage NF after passing it through the turbocharger unit or booster pump or in combination thereof, and the product from this second stage NF unit combined with the NF product from the first NF stage constitutes the **first water product.**

5. An optimal desalination method and apparatus in which as in Claim 2, the first SWRO stage comprises a high pressure pump to deliver feed at P = 60 $\pm$ 10 bar to the SWRO unit to produce from it, a SWRO product and reject streams; passing the SWRO reject stream through a turbocharger or booster pump or combination thereof to boost its pressure, by energy recovered from second SWRO stage reject, to 85 $\pm$ 10 bar before feeding it to the second stage SWRO unit to form a third SWRO product of potable quality and a fourth SWRO reject.

6. An optimal desalination method and apparatus in which as in Claim 2 the $SWRO_1$ unit comprises a high pressure pump to deliver to a high pressure tolerant membrane, up to 84 bar, at pressure of P=75$\pm$ 10 bar, one part of the feed to SWRO membranes (first part) equals to their product (permeate) and to blend this first part of pump pressurized (P=75 $\pm$10 bar) NF product with a second part of NF product equals to $SWRO_1$ reject after passing this second part through the PX unit, which raises its pressure to be the exact equal to that of first part (P=75 $\pm$ 10 bar) from the energy it (PX) recovered from $SWRO_1$ unit brine, and to produce from this combined of equal pressure NF product as feed to $SWRO_1$ unit a **Third Water Permeate Product** of potable quality, and a reject, as a **Fourth Water Product Reject.**

7. An optimal desalination system as in Claims 1 and 2, utilizing NF membranes of moderate to high product flow and high rejection of scale forming hardness ions: $SO_4^=$, by over 90%, and other hardness ions in the order of 60 to 98%, while membrane in the second stage NF are **characterized by** high rejection at moderate product flow and are high pressure tolerant up to 40 bar or higher.

8. An optimal desalination system as in Claims 1 and 2 in which the turbocharger alone or in combination with a booster pump, or booster pump by itself capable of receiving high pressure feed, can boost the pressure of feed to the second NF stage from 25 $\pm$ 10 bar to 35 $\pm$ 10 bar or higher.

9. An optimal desalination system as in Claim 2 in which the turbocharger alone or in combination with a booster pump, or booster pump by itself capable of receiving high pressure feed, can boost the pressure of feed to the second SWRO stage from 60 $\pm$ 10 bar to 85 $\pm$ 10 bar or higher.

10. An optimal desalination system as in Claim 2 utilizing in the first stage SWRO a commercial SWRO membrane of the type used in conventional one stage SWRO plants, having a high salt rejection of 99.0% or more and can withstand pressure up to 70 bar or better, while high pressure tolerant SWRO membrane up to 90 $\pm$10, is utilized in the second stage SWRO.

11. An optimal desalination system as in Claim 2 utilizing pressure vessels in 1st and 2nd stage SWRO that can withstand pressure of up to 70 and 100 bar, respectively.

12. An optimal desalination system as in Claims 1 and 2 wherein said saline water comprises seawater.

13. An optimal desalination system as in Claim 11 wherein said seawater has a total dissolved solids content on the order of 2.0% - 5.0%.

14. An optimal desalination system as in Claim 11 wherein said seawater solution has a cation content on the order of 1.2% - 1.7%, an anion content on the order of 2.2% - 2.8%, a pH on the order of 7.9 - 8.2, comparable to a total dissolved solids content on the order of 2.0% - 5.0%.

15. An optimal desalination system as in Claim 13 further comprising said cation content including 700-2200 ppm of calcium and magnesium cations.

16. An optimal desalination system as in Claims 11 and 13 wherein, with respect to said seawater properties, calcium, magnesium, sulfate and bicarbonate ion content is reduced by the $NF_2$ unit on the order of 63% -99%, and total dissolved solids content is reduced by about 30% - 50%.

17. An optimal desalination system as in Claims 1 and 2 wherein said nanofiltration unit is operated at a temperature on the order of 15°C - 40 °C.

**18.** An optimal desalination system as in Claim 2 wherein said seawater reverse osmosis unit is operated at a temperature on the order of 15°C - 40 °C.

**19.** An optimal desalination system as in Claims 1 and 2 wherein said thermal unit of MFSD is operated at top brine temperature (TBT) ≥ 120°C up to 160°C, while thermal unit of the type MED or VCD or RH is operated at TBT ≥ 70°C up to 120°C.

**20.** A desalination process as in Claim 1 wherein said **second water product** comprises potable water and its product recovery ratio as compared to the seawater feed is on the order of 54% or better.

**21.** A desalination process as in Claim 2 wherein said **third water product** comprises potable water (SWRO permeate) and its product recovery ratio is on the order of 69% as compared to the quantity of NF product it receives as feed having TDS of about ≈ 28,500 ppm, and it increases as the feed TDS is decreased.

**22.** A desalination process as in Claim 2 where the total combined water product with potable water qualities is equal to the total of both the **second** and **third water products** and its total potable water recovery ratio is in order of 60% or better, and it exceeds in value any prior art thermal seawater desalination recovery ratio for seawater feed of TDS = 45,000 ppm.

**23.** A desalination process as in Claims 1 and 2 wherein the saline water is passed to the NF unit with or without proper antiscalant.

A. NF Unit    Recovery = 62%    Recovery = 35%

316 m³/h    196 m³/h    42 m³/h

P = 35 ± 10 bar

P = 25 ± 10 bar
TDS = 45,000 ppm

Booster pump

P = 24 ± 10 bar    120 m³/h    P = 33 ± 10 bar

Turbo Charger    78 m³/h

B. SWRO Unit

Recovery = 56%    Recovery = 35%    P = 170 m³/h

TDS = 28,500 ppm    133 m³/h
238 m³/h    P = 90 ± 10 bar

1st Stage    37 m³/h

P = 55 ± 10 bar    Booster pump    P = 88 ± 10 bar
1st Stage

105 m³/h    Turbo Charger

P = 54 ± 10 bar    68 bar
TDS = 99,600 ppm

Fig. 1    TDS = 64,770 ppm

EP 1 614 660 A1

EP 1 614 660 A1

**A. NF Unit**    **Recovery = 62%**     **Recovery = 35%**

96 m³/h       42 m³/h

**P = 35 ± 10 bar**

**316 m³/h**

**P = 25 ± 10 bar**     Booster pump    **P = 33 ± 10 bar**

**P = 24 ± 10 bar**    **120 m³/h**    **Turbo Charger**

**78 m³/h**

**B. SWRO Unit**

**Recovery = 70%**

TDS = 28,500 ppm
**238 m³/h**

**P = 75 ± 10 bar**         **P = 167 m³/h**

Booster pump

**P = 55 ± 10 bar**      **P = 73 ± 10 bar**
**71 m³/h**

**TDS = 95,600 ppm**

**71 m³/h**     **Fig. 2a**

**Turbo Charger**

EP 1 614 660 A1

**A. NF Unit**    **Recovery = 62%**     **Recovery = 35%**

196 m³/h      42 m³/h

316 m³/h

P = 35 ± 10 bar

Booster pump

P = 25 ± 10 bar
TDS = 45,000 ppm

P = 33 ± 10 bar

P = 24 ± 10 bar    120 m³/h    **Turbo Charger**

78 m³/h

**Seawater
28,500 PPM**

75 ± 10 bar,    238 m³/h    **71% Recovery**
169 m³/h     65 bar    **Toyobo HM10255 Membrane**

3 bar,
169 m³/h

Product, 169 m³/h

3 bar,
238 (m³/h)

**High Pressure Pump**

75 ± 10 bar,
69 m³/h

HP Reject

**(HPP)**

73 ± 10 bar,
69 m³/h

HP Booster

3 bar,
69 m³/h

71 ± 10 bar,
69 m³/h

## Fig. 2b

LP Feed

0 bar,
69 m³/h

3bar,
69 m³/h

PX

**A. NF Unit**  Recovery = 62%    Recovery = 35%

316 m³/h

TDS = 51,000 ppm
437 m³/h

196 m³/h    61 m³/h

P = 35 ± 10 bar

121 m³/h  P = 25 ± 10 bar

Booster pump

P = 33 ± 10 bar

P = 24 ± 10 bar    175 m³/h

Turbo Charger

113 m³/h

**B. SWRO Unit**    Recovery = 56%

TDS = 30,000 ppm
323 m³/h

P = 181 m³/h

P = 65 ± 5 bar

P = 50 ± 10 bar

Booster pump

P = 63 ± 5 bar
71 m³/h

TDS = 68,200 ppm
143 m³/h

22 m³/h

Turbo Charger

**Fig. 3a**

EP 1 614 660 A1

**A. NF Unit**  **Recovery = 62%**  **Recovery = 35%**

316 m³/h

TDS = 51,000 ppm
437 m³/h

196 m³/h                          61 m³/h

P = 25 ± 10 bar

P = 35 ± 10 bar

Booster pump

P = 33 ± 10 bar

121 m³/h

P = 24 ± 10 bar   175 m³/h   Turbo Charger

113 m³/h

56% Recovery

Seawater
30,000 PPM

3 bar,
180 m³/h

65 ± 5 bar,
180 m³/h

323 m³/h
65 bar

Product, 180 m³/h

3 bar,
323 m³/h

High Pressure Pump

(HPP)

65 ± 5 bar,
143 m³/h

HP Reject

63 ± 5 bar,
143 m³/h

HP Booster

3 bar,
143 m³/h

61 ± 5 bar,
143 m³/h

LP Feed   3bar,
143 m³/h

2 bar,
143 m³/h

PX

22 m³/h

**Fig. 3b**

EP 1 614 660 A1

- TDS = 44000 ( ppm )
- Hardness Ions ( scale Forming )
  $Ca^{++}$ = 481 ppm, $Mg^{++}$ = 1608 ppm, $SO_4^=$ = 3200 ppm, $HCO_3^-$ = 128 ppm
- Bacteria
- TSS

**Seawater feed or make-up**

**Product Permeate / Distillate**

**At 35 % Recovery ( Low salt concentration )**

**Reject or Blow Down**

**65%**

- TDS = 67692 ( ppm )
- Hardness Ions ( scale Forming )
  $Ca^{++}$ = 740 ppm, $Mg^{++}$ = 2473 ppm, $SO_4^=$ = 4423 ppm, $HCO_3^-$ = 147 ppm
- Bacteria ( increased )
- TSS ( increased )

Fig. 4

EP 1 614 660 A1

**1. Scaling**
    Caused by high concentration of hardness ions

**2. High Energy Consumption**
    Caused by high concentration of TDS

**3. Corrosion**
    Due to high concentration of TDS & $Cl^-$ ions

**4. Fouling**
    Caused by presence in seawater of :
    ▶ Inorganic (TSS)
    ▶ Organic (organic matter)
    ▶ Bio (Bacteria)

Problems ! ! !

Fig. 5

EP 1 614 660 A1

Fig. 6

a. Flow (l/m)

◆ Feed NF product from seawater
■ Feed seawater

$P_{appl.}$

b. Recovery (%)

$P_{appl.}$

c. Conductivity (μS/cm)

Feed Pressure ($P_{appl.}$ bar)

Fig. 7

Fig. 8

**CASE 1**

SW Pump — 720 m³/h — Filter Forward Pump

Intake Sump — Gravity Filter — Filtered Water Sump — Pressure Filter — Clear Well

Seawater 720 m³/h

To Train200

CF — HP Pump

**1st Stage RO 30% Conversion**

65 bar 360 m³/h

108 m³/h — 2nd Stage HP Pump

30 bar

**2nd Stage RO 85% Conversion** a.SWRO

To Train100

Cartridge Filter — NF Pumps

25 bar 360 m³/h

**65% Conversion NF Section**

234 m³/h

SWRO HP Pump — Brine Outfall — 64 bar 98 m3/h

**SWRO 58 % Conversion**

91.8 m³/h

136 m³/h

b. NF-SWRO

**Fig. 9**

EP 1 614 660 A1

Fig. 10

Fig. 11

Fig. 12

Fig. 13

* Total Recovery =78%, Final Product TDS = 32270 ppm, While for First Two Vessels Recovery 66.7 and TDS=31170 ppm

Fig. 14

37

**Fig. 15**

a.Permeate Flow

b.Permeate Recovery

c.Permeate Conductivity

At T= 30 °C & Feed Flow =14 m³/hr    At P=25 kg/cm² & Feed Flow =14 m³/hr    At T= 20°C &P=25 kg/cm2    At P=25 kg/cm², T=25°C & F.F=14m³/hr

Fig. 16

EP 1 614 660 A1

# A. Conventional SWRO

To Train200

1st Stage RO
30% Conversion

2nd Stage RO
85% Conversion a.SWRO

65 bar
602 m³/h

30 bar

HP Pump

181 m³/h
2nd Stage
HP Pump

158 m³/h

# B. Two Stage Each of NF and SWRO

A.    NF Unit                Recovery = 62%                Recovery = 35%

292 m³/h                                                   181 m³/h        P = 34 Kg/cm²        39 m³/h

P = 25 Kg/cm²                                             Booster pump

P = 24 Kg/cm²                                             111 m³/h        P = 33 Kg/cm²
                                                                          Turbo Charger
                                                                          72 m³/h

B. SWRO Unit                                                              Recovery = 35%        P = 158 m³/h

220 m³/h                    Recovery = 56%                124 m³/h

P = 60 Kg/cm²                                             Booster pump                          34 m³/h

P = 64 Kg/cm²                                             96 m³/h         P = 90Kg/cm²
                                                                          Turbo Charger

## Fig. 17                                                                62 m³/h

EP 1 614 660 A1

**EP 1 614 660 A1**

**European Patent Office**

**EUROPEAN SEARCH REPORT**

Application Number

EP 04 42 5500

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | ABDUL-KAREEM AL-SOFI M: "Seawater desalination - SWCC experience and vision" DESALINATION, ELSEVIER SCIENTIFIC PUBLISHING CO, AMSTERDAM, NL, vol. 135, no. 1-3, 20 April 2001 (2001-04-20), pages 121-139, XP004249636 ISSN: 0011-9164 * page 124 - page 128; figures 23,29 * ----- | 1 | C02F1/44 C02F1/06 B01D61/02 B01D61/06 B01D3/06 |
| A | US 4 083 781 A (CONGER FRANKLIN E) 11 April 1978 (1978-04-11) * the whole document * ----- | 1-23 | |
| A | EP 1 354 855 A (L E T LEADING EDGE TECHNOLOGIE) 22 October 2003 (2003-10-22) * the whole document * ----- | 1-23 | |
| A | VAN DER BRUGGEN B ET AL: "Distillation vs. membrane filtration: overview of process evolutions in seawater desalination" DESALINATION, ELSEVIER SCIENTIFIC PUBLISHING CO, AMSTERDAM, NL, vol. 143, no. 3, 10 June 2002 (2002-06-10), pages 207-218, XP004374878 ISSN: 0011-9164 * the whole document * ----- -/-- | 1-23 | **TECHNICAL FIELDS SEARCHED (Int.Cl.7)** B01D C02F |

The present search report has been drawn up for all claims

| Place of search | Date of completion of the search | Examiner |
|---|---|---|
| The Hague | 6 December 2004 | Liebig, T |

EPO FORM 1503 03.82 (P04C01)

**European Patent Office**

## EUROPEAN SEARCH REPORT

Application Number

EP 04 42 5500

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EL-SAYED E ET AL: "Performance evaluation of two RO membrane configurations in a MSF/RO hybrid system" DESALINATION, ELSEVIER SCIENTIFIC PUBLISHING CO, AMSTERDAM, NL, vol. 128, no. 3, May 2000 (2000-05), pages 231-245, XP004204830 ISSN: 0011-9164 * the whole document * | 1-23 | |
| A | GEISLER P ET AL: "Reduction of the energy demand for seawater RO with the pressure exchange systems PES" DESALINATION, ELSEVIER SCIENTIFIC PUBLISHING CO, AMSTERDAM, NL, vol. 135, no. 1-3, 20 April 2001 (2001-04-20), pages 205-210, XP004249642 ISSN: 0011-9164 * the whole document * | 1-23 | |
| A | SADHUKHAN H K ET AL: "Design of a 1.4 mgd desalination plant based on MSF and RO processes for an arid area in India" DESALINATION, ELSEVIER SCIENTIFIC PUBLISHING CO, AMSTERDAM, NL, vol. 106, no. 1, August 1996 (1996-08), pages 17-23, XP004019142 ISSN: 0011-9164 * the whole document * | 1-23 | TECHNICAL FIELDS SEARCHED (Int.Cl.7) |

The present search report has been drawn up for all claims

| Place of search | Date of completion of the search | Examiner |
|---|---|---|
| The Hague | 6 December 2004 | Liebig, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 42 5500

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2004

| Patent document cited in search report | | Publication date | Patent family member(s) | | Publication date |
|---|---|---|---|---|---|
| US 4083781 | A | 11-04-1978 | AU | 2649477 A | 04-01-1979 |
| | | | IT | 1080767 B | 16-05-1985 |
| | | | JP | 53009278 A | 27-01-1978 |
| EP 1354855 | A | 22-10-2003 | EP | 1354855 A2 | 22-10-2003 |
| | | | AT | 243656 T | 15-07-2003 |
| | | | AU | 6776900 A | 19-03-2001 |
| | | | DE | 60003564 D1 | 31-07-2003 |
| | | | DE | 60003564 T2 | 24-12-2003 |
| | | | EP | 1206414 A1 | 22-05-2002 |
| | | | ES | 2197114 T3 | 01-01-2004 |
| | | | JP | 2003507183 T | 25-02-2003 |
| | | | WO | 0114256 A1 | 01-03-2001 |
| | | | US | 6783682 B1 | 31-08-2004 |

EPO FORM P0459

For more details about this annex : see Official Journal of the European Patent Office, No. 12/82